(19)

Europäisches
Patentamt
European
Patent Office
Office européen
des brevets

(11)  **EP 4 589 325 A1**

(12)  **EUROPEAN PATENT APPLICATION**
published in accordance with Art. 153(4) EPC

(43) Date of publication:
**23.07.2025   Bulletin 2025/30**

(21) Application number: **23877768.4**

(22) Date of filing: **13.10.2023**

(51) International Patent Classification (IPC):
*G01S 5/02*[(2010.01)]        *G06N 3/045*[(2023.01)]

(52) Cooperative Patent Classification (CPC):
**G01S 5/02; G06N 3/04; G06N 3/045**

(86) International application number:
**PCT/KR2023/015878**

(87) International publication number:
**WO 2024/080845 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **13.10.2022   KR 20220131628**

(71) Applicant: **Samsung Electronics Co., Ltd.
Suwon-si, Gyeonggi-do 16677 (KR)**

(72) Inventors:
• **CHOI, Junyoung**
 **Suwon-si Gyeonggi-do 16677 (KR)**
• **BHATTACHARYA, Sagnik**
 **Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54)  **METHOD AND APPARATUS FOR ADJUSTING RANGING REGION BY USING
ULTRA-WIDEBAND COMMUNICATION SIGNAL**

(57)     The present disclosure discloses a method by which an electronic apparatus adjusts a gate ranging region. The method according to the present disclosure may comprise the steps of: by using a trained first convolutional neural network (CNN) model, acquiring LOS probability data on the basis of a DL-TDoA signal received from at least one UWB anchor; acquiring an average LOS probability on the basis of the LOS probability data; on the basis of the average LOS probability, determining whether or not the electronic apparatus is present in an LOS environment; if the electronic apparatus is present in the LOS environment, maintaining an initially established gate access region; and if the electronic apparatus is present in the LOS environment, adjusting a gate access region according to the value of the average LOS probability. Here, the gate access region may be a region in which the electronic apparatus and a gate apparatus initiate DS-TWR ranging for a transaction.

FIG. 14

EP 4 589 325 A1

**Description**

[Technical Field]

The disclosure relates to a method and device for adjusting a ranging area using an ultra-wideband (UWB) signal.

[Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).
In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or state-of-art medical services, through conversion or integration of conventional information technology (IT) techniques and various industries.

[Detailed Description of the Invention]

[Technical Problem]

The disclosure provides a method and device for adjusting a gate access area using a UWB signal.
Further, the disclosure provides a method 2 and a device for adjusting a gate area using a UWB signal.

[Technical Solution]

According to various embodiments of the disclosure, a method by an electronic device using UWB communication may comprise obtaining LOS probability data based on a DL-TDoA signal received from at least one UWB anchor using a trained first convolutional neural network (CNN) model, obtaining an average LOS probability based on the LOS probability data, determining whether the electronic device is in a LOS environment based on the average LOS probability, maintaining an initially set gate access area in case that the electronic device is in the LOS environment, and adjusting the gate access area according to a value of the average LOS probability in case that the electronic device is in the LOS environment. The gate access area may be an area in which the electronic device and a gate device initiate DS-TWR ranging for a transaction.
According to various embodiments of the disclosure, an electronic device using UWB communication may comprise a transceiver and a controller connected to the transceiver. The controller may be configured to obtain LOS probability data based on a DL-TDoA signal received from at least one UWB anchor using a trained first convolutional neural network (CNN) model, obtain an average LOS probability based on the LOS probability data, determine whether the electronic device is in a LOS environment based on the average LOS probability, maintain an initially set gate access area in case that the electronic device is in the LOS environment, and adjust the gate access area according to a value of the average LOS probability in case that the electronic device is in the LOS environment. The gate access area may be an area in which the electronic device and a gate device initiate DS-TWR ranging for a transaction.

[Brief Description of Drawings]

FIG. 1 is a block diagram schematically illustrating an electronic device;
FIG. 2A illustrates an example architecture of a UWB device according to an embodiment of the disclosure;
FIG. 2B illustrates an example configuration of a framework of a UWB device according to an embodiment of the disclosure;
FIG. 3A illustrates an example of UWB CIR data according to an embodiment of the disclosure;
FIG. 3B illustrates an example of effective UWB CIR data according to an embodiment of the disclosure;
FIG. 3C illustrates an example of a LOS signal and an NLOS signal classified using UWB CIR data according to an embodiment of the disclosure;

FIG. 4 illustrates DS-TWR according to an embodiment of the disclosure;

FIG. 5 illustrates DL-TDoA according to an embodiment of the disclosure;

FIG. 6 illustrates a training procedure and a distribution procedure for LOS/NLOS signal classification using UWB channel impulse response data according to an embodiment of the disclosure;

FIG. 7 illustrates a configuration of a user device for LOS/NLOS classification according to an embodiment of the disclosure;

FIG. 8 illustrates a training procedure for pose classification based on LOS/NLOS signal classification using UWB channel impulse response data according to an embodiment of the disclosure;

FIG. 9 illustrates a distribution procedure for pose classification based on a LOS/NLOS signal classification using UWB channel impulse response data according to an embodiment of the disclosure;

FIG. 10 illustrates a configuration of a user device for pose classification using LOS/NLOS classification according to an embodiment of the disclosure;

FIG. 11 illustrates an example architecture of a system of providing a UWB-based gate service according to an embodiment of the disclosure.

FIG. 12 illustrates an example operation scenario of a gate system according to an embodiment of the disclosure;

FIG. 13 illustrates a smart gate service procedure of a gate system according to an embodiment of the disclosure;

FIG. 14 illustrates a gate environment according to an embodiment of the disclosure;

FIG. 15 exemplarily illustrates issues occurring in a gate environment according to an embodiment of the disclosure;

FIG. 16A illustrates a method for setting an adaptive gate access area in a gate environment according to an embodiment of the disclosure;

FIG. 16B illustrates an example of a gate access area extended according to an adaptive gate access area setting method in a gate environment according to an embodiment of the disclosure;

FIG. 17 illustrates a gate access area ratio according to a LOS probability according to an embodiment of the disclosure;

FIGS. 18A and 18B illustrate a method for setting a maximum extendable area to set an adaptive gate access area in a gate environment according to an embodiment of the disclosure;

FIG. 19A illustrates a method for setting an adaptive gate access area using a maximum extendable area in a gate environment according to an embodiment of the disclosure;

FIG. 19B illustrates an example of a gate access area extended according to an adaptive gate access area setting method in a gate environment according to an embodiment of the disclosure;

FIG. 20A illustrates a method for setting an adaptive gate access area using a maximum extendable area in a gate environment according to an embodiment of the disclosure;

FIG. 20B illustrates an example of a gate access area extended according to an adaptive gate access area setting method in a gate environment according to an embodiment of the disclosure;

FIG. 21 illustrates a method for setting an adaptive gate area according to an embodiment of the disclosure;

FIG. 22 illustrates examples of a gate area set according to an adaptive gate area setting method in a gate environment according to an embodiment of the disclosure; and

FIG. 23 is a view illustrating a structure of an electronic device according to an embodiment of the disclosure.

[Mode for Carrying out the Invention]

Hereinafter, embodiments of the disclosure are described in detail with reference to the accompanying drawings.

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

Hereinafter, embodiments of the present invention are described in detail with reference to the accompanying drawings. Further, although a communication system using UWB is described in connection with embodiments of the present invention, as an example, embodiments of the present invention may also apply to other communication systems with similar technical background or features. For example, a communication system using Bluetooth or ZigBee may be included therein. Further, embodiments of the present invention may be modified in such a range as not to significantly depart from the scope of the present invention under the determination by one of ordinary skill in the art and such modifications may be applicable to other communication systems.

When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

In general, wireless sensor network technology is largely divided into a wireless local area network (WLAN) technology and a wireless personal area network (WPAN) technology according to the recognition distance. In this case, WLAN is a technology based on IEEE 802.11 which enables access to the backbone network within a radius of about 100m. WPAN is a technology based on IEEE 802.15 which includes Bluetooth, ZigBee, and ultra wide band (UWB). A wireless network in which such a wireless network technology is implemented may include a plurality of electronic devices.

According to the definitions by the Federal Communications Commission (FCC), UWB may refer to a wireless communication technology that uses a bandwidth of 500 MHz or more or a bandwidth corresponding to a center frequency of 20% or more. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known).

The terminology used herein is provided for a better understanding of the disclosure, and changes may be made thereto without departing from the technical spirit of the disclosure.

"Application dedicated file (ADF)" may be, e.g., a data structure in an application data structure that may host an application or application specific data.

"Application protocol data unit (APDU)" may be a command and a response used when communicating with the application data structure in the UWB device.

"Application specific data" may be, e.g., a file structure having a root level and an application level including UWB controlee information and UWB session data required for a UWB session.

"Controller" may be a ranging device that defines and controls ranging control messages (RCM) (or control messages). The controller may define and control ranging features by transmitting a control message.

"Controlee" may be a ranging device using a ranging parameter in the RCM (or control message) received from the controller. The controlee may use the same ranging features as those configured through control messages from the controller.

Unlike "static STS," "dynamic scrambled timestamp sequence (STS) mode" may be an operation mode in which the STS is not repeated during a ranging session. In this mode, the STS may be managed by the ranging device, and the ranging session key that generates STS may be managed by a secure component.

"Applet" may be, e.g., an applet executed on the secure component including UWB parameters and service data. The applet may be a FiRa applet.

"Ranging device" may be a device capable of performing UWB ranging. In the disclosure, the ranging device may be an enhanced ranging device (ERDEV) defined in IEEE 802.15.4z or a FiRa Device. The ranging device may be referred to as a UWB device.

"UWB-enabled Application" may be an application for UWB service. For example, the UWB-enabled Application may be an application using a Framework API for configuring an OOB Connector, a Secure Service, and/or a UWB service for a UWB session. "UWB-enabled Application" may be abbreviated as an application or a UWB application. UWB-enabled Application may be a FiRa-enabled Application.

"Framework" may be a component that provides access to Profiles, individual-UWB configuration and/or notifications. "Framework" may be, e.g., a collection of logical software components including Profile Manager, OOB Connector, Secure Service, and/or UWB service. The framework may be a FiRa framework.

"OOB Connector" may be a software component for establishing an out-of-band (OOB) connection (e.g., BLE connection) between Ranging Devices. The OOB connector may be a FiRa OOB connector.

"Profile" may be a previously defined set of UWB and OOB configuration parameters. The profile may be a FiRa profile.

"Profile Manager" may be a software component that implements a profile available on the Ranging Device. The profile manager may be a FiRa profile manager.

"Service" may be an implementation of a use case that provides a service to an end-user.

"Smart Ranging Device" may be a ranging device that may implement an optional Framework API. The smart ranging device may be a FiRa smart device.

"Global Dedicated File (GDF)" may be a root level of application specific data including data required to establish a USB session.

"Framework API" may be an API used by a UWB-enabled Application to communicate with the Framework.

"Initiator" may be a Ranging Device that initiates a ranging exchange. The initiator may initiate a ranging exchange by transmitting a first RFRAME (ranging exchange message).

"Object Identifier (OID)" may be an identifier of the ADF in the application data structure.

"Out-Of-Band (OOB)" may be data communication that does not use UWB as an underlying wireless technology.

"Ranging Data Set (RDS)" may be data (e.g., UWB session key, session ID, etc.) required to establish a UWB session when it is needed to protect confidentiality, authenticity and integrity.

"Responder" may be a ranging device that responds to the Initiator in a ranging exchange. The responder may respond to the ranging exchange message received from the initiator.

"STS" may be a ciphered sequence for increasing the integrity and accuracy of ranging measurement timestamps. The STS may be generated from the ranging session key.

"Secure channel" may be a data channel that prevents overhearing and tampering.

"Secure component" may be an entity (e.g., secure element (SE) or trusted execution environment (TEE)) having a defined security level that interfaces with UWBS for the purpose of providing RDS to UWBS, e.g., when dynamic STS is used.

"SE" may be a tamper-resistant secure hardware component that may be used as a Secure Component in the Ranging Device.

"Secure ranging" may be ranging based on STS generated through a strong encryption operation.

"Secure Service" may be a software component for interfacing with a Secure Component, such as a Secure Element or TEE.

"Service Applet" may be an applet on a Secure Component that handles service specific transactions.

"Service Data" may be data defined by a service provider that needs to be transferred between two ranging devices to implement a service.

"Service Provider" may be an entity that defines and provides hardware and software required to provide a specific service to an end-user.

"Static STS mode" is an operation mode in which STS is repeated during a session, and does not need to be managed by the Secure Component.

"Secure UWB Service (SUS) Applet" may be an applet on the SE that communicates with the applet to retrieve data needed to enable secure UWB sessions with other ranging devices. The SUS Applet may transfer corresponding data (information) to the UWBS.

"UWB Service" may be a software component that provides access to the UWBS.

"UWB Session" may be a period from when the Controller and the Controlee start communication through UWB until the communication stops. A UWB Session may include ranging, data transfer, or both ranging and data transfer.

"UWB Session ID" may be an ID (e.g., a 32-bit integer) that identifies the UWB Session, shared between the controller and the controller.

"UWB session key" may be a key used to protect the UWB Session. The UWB Session Key may be used to generate the STS. The UWB session key may be a UWB ranging session key (URSK), and may be abbreviated as a session key.

"UWB Subsystem (UWBS)" may be a hardware component implementing the UWB PHY and MAC layers specifications. UWBS may have an interface to Framework and an interface to Secure Component to search for RDS.

"UWB message" may be a message including a payload IE transmitted by the UWB device (e.g., ERDEV). The UWB message may be such a message as, e.g., ranging initiation message (RIM), ranging response message (RRM), ranging final message (RFM), control message (CM), measurement report message (MRM), ranging result report message (RRRM), control update message (CUM) or one-way ranging (OWR) message. If necessary, a plurality of messages may be merged into one message.

"OWR" may be a ranging scheme using messages unilaterally transmitted between a ranging device and one or more other ranging devices. OWR may be used to measure the time difference of arrival (TDoA). Additionally, OWR may be used to measure AoA at the receiving end, rather than measuring TDoA. In this case, a pair of advertiser and observer may be used.

"TWR" may be a ranging scheme capable of estimating a relative distance between two devices by measuring time of flight (ToF) through the exchange of ranging messages between the two devices. The TWR scheme may be one of double-sided two-way ranging (DS-TWR) and single-sided two-way ranging (SS-TWR). SS-TWR may be a procedure for performing ranging through one round-trip time measurement. For example, SS-TWR may include a RIM transmission operation from the initiator to the responder, and an RRM transmission operation from the responder to the initiator. DS-TWR may be a procedure for performing ranging through two round-trip time measurements. For example, DS-TWR may include a RIM transmission operation from the initiator to the responder, an RRM transmission operation from the responder to the initiator, and an RFM transmission operation from the initiator to the responder. Through the ranging exchange, the time of flight (ToF) may be calculated, and the distance between the two devices may be estimated. Meanwhile, during the TWR process, the measured AoA information (e.g., AoA azimuth result, AoA elevation result) may be transferred to another ranging device through RRRM or other messages. In the disclosure, TWR may also be referred to as UWB TWR.

"DL-TDoA" may be called Downlink Time Difference of Arrival (DL-TDoA), reverse TDoA, and its default operation may be for the user device (UE) (Tag device) to overhear the message of the anchor device while a plurality of anchor devices broadcast or exchange messages. DL-TDoA may be classified as a type of one way ranging like Uplink TDoA. The UE performing the DL-TDoA operation may overhear the messages transmitted by the two anchor devices to calculate a Time Difference of Arrival (TDoA) proportional to the difference between the distances between each anchor device and the UE. The UE may calculate a relative distance to the anchor device by using TDoA with several pairs of anchor devices and use it for positioning. The operation of the anchor device for DL-TDoA may be similar to that of Double Side-Two Way Ranging (DS-TWR) defined in IEEE 802.15.4z and may further include other useful time information so that the UE may calculate the TDoA. In the disclosure, DL-TDoA may be referred to as DL-TDoA localization.

"Anchor device" may be referred to as an anchor, a UWB anchor or a UWB anchor device and may be a UWB device deployed in a specific position to provide a positioning service. For example, the anchor device may be a UWB device installed by a service provider on a wall, ceiling, structure, or the like in a room to provide an indoor positioning service. Anchor devices may be divided into initiator anchors and responder anchors according to the order and role of transmitting messages.

"Initiator anchor" may be referred to as an initiator UWB anchor, an initiator anchor device, or the like and may announce the start of a specific ranging round. The initiator anchor may schedule a ranging slot for the responder anchors operating in the same ranging round to respond. The initiation message of the initiator anchor may be referred to as an initiator Downlink TDoA Message (DTM) or Poll message. The initiation message of the initiator anchor may include a transmission timestamp. The initiator anchor may additionally transfer an end message after receiving responses from the responder anchors. The end message of the initiator anchor may be referred to as Final DTM or Final message. The end message may include the time of the reply to the messages sent by the responder anchors. The end message may include a transmission timestamp.

"Responder anchor" may also be referred to as a Responder UWB anchor, a Responder UWB anchor device, a Responder anchor device, etc. The responder anchor may be a UWB anchor responding to the initiation message of the initiator anchor. The message with which the responder anchor responds may include the time of reply to the initiation message. The message with which the responder anchor responds may be referred to as a Responder DTM or a Response message. The response message of the responder anchor may include a transmission timestamp.

"Cluster" may mean a set of UWB anchors covering a specific area. The cluster may be composed of an initiator UWB anchor and responder UWB anchors responding thereto. For 2D positioning, one initiator UWB anchor and at least three responder UWB anchors are typically required and, for 3D positioning, one initiator UWB anchor and at least four responder UWB anchors are required. If the initiator UWB anchor and the responder UWB anchor may be accurately time-synchronized through a separate wired/wireless connection, one initiator UWB anchor and two responder UWB anchors are required for 2D positioning, and one initiator UWB anchor and three responder UWB anchors are required for 3D positioning. Unless otherwise stated, it is assumed that there is no separate device for wired/wireless time synchronization between UWB anchors. The cluster area may be a space formed by the UWB anchors constituting the cluster. To support the positioning service for a wide area, a plurality of clusters may be configured to provide the positioning service to the UE. Cluster may be referred to as a cell. The operation of the cluster may be understood as the operation of anchor(s) belonging to the cluster.

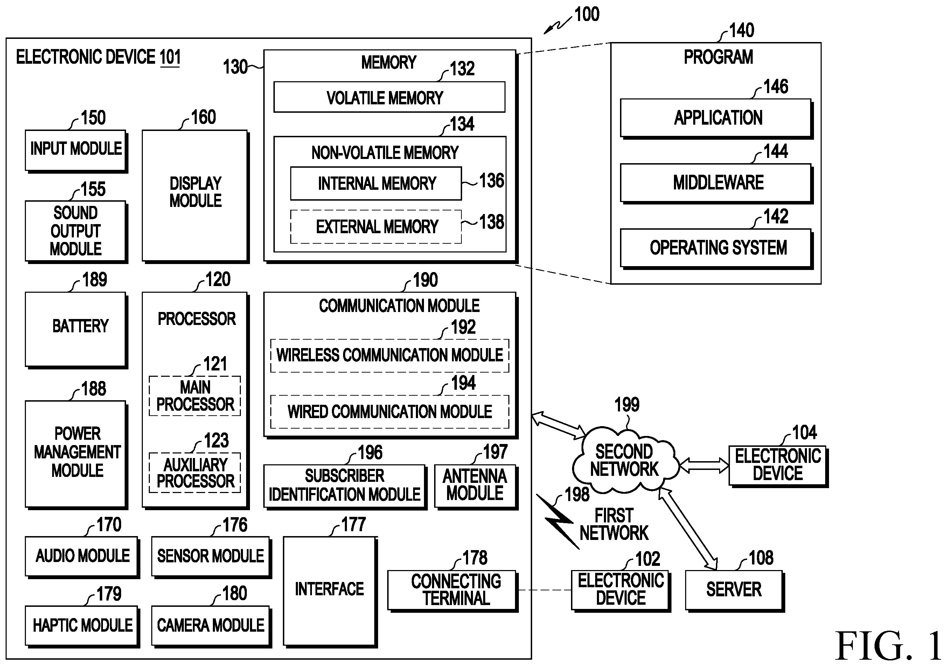

FIG. 1 is a block diagram schematically illustrating an electronic device.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth™, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in the form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

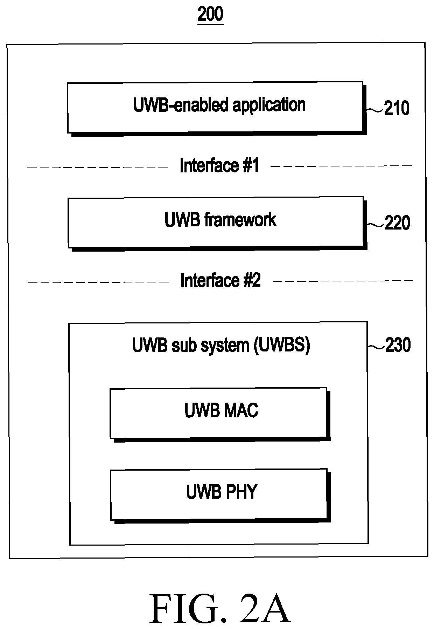

FIG. 2A illustrates an example architecture of a UWB device according to an embodiment of the disclosure.

In the disclosure, the UWB device 200 may be an electronic device supporting UWB communication. For example, the UWB device 200 may be an example of the electronic device 101 of FIG. 1.

The UWB device 200 may be, e.g., a ranging device supporting UWB ranging. In an embodiment, the ranging device may be an enhanced ranging device (ERDEV) or a FiRa device.

In the embodiment of FIG. 2A, the UWB device 200 may interact with other UWB devices through a UWB session.

The UWB device 200 may implement a first interface (Interface #1) that is an interface between the UWB-enabled Application 210 and the Framework 220, and the first interface allows the UWB-enabled application 110 on the UWB device 200 to use the UWB capabilities of the UWB device 200 in a predetermined manner. In an embodiment, the first interface may be a Framework API or a proprietary interface, but is not limited thereto.

The UWB device 200 may implement a second interface (Interface #2) that is an interface between the UWB Framework 210 and the UWB subsystem (UWBS, 230). In an embodiment, the second interface may be a UWB Command Interface (UCI) or proprietary interface, but is not limited thereto.

Referring to FIG. 2A, the UWB device 200 may include a UWB-enabled Application 210, a Framework (UWB Framework) 220, and/or a UWBS 230 including a UWB MAC Layer and a UWB Physical Layer. Depending on the embodiment, some entities may not be included in the UWB device, or additional entities (e.g., security layer) may be further included.

The UWB-enabled Application 210 may trigger establishment of a UWB session by a UWBS 230 through the first interface. The UWB-enabled Application 210 may use one of previously defined profiles (profile). For example, the UWB-enabled Application 210 may use one of the profiles defined in FiRa or a custom profile. The UWB-enabled Application 210 may use the first interface to handle related events, such as service discovery, ranging notifications, and/or error conditions.

The Framework 220 may provide access to Profiles, individual-UWB configuration and/or notifications. The Framework 220 may support at least one of a function for UWB ranging and transaction execution, a function to provide an interface to the application and UWBS 230, or a function to estimate the position of the device 200. The Framework 220 may be a set of software components. As described above, the UWB-enabled Application 210 may interface with the Framework 220 through the first interface, and the Framework 220 may interface with the UWBS 230 through the second interface.

Meanwhile, in the disclosure, the UWB-enabled Application 210 and/or Framework 220 may be implemented by an application processor (AP) (or processor). Accordingly, in the disclosure, the operation of the UWB-enabled Application 210 and/or the Framework 220 may be understood as performed by an AP (or a processor). In this disclosure, the framework may be referred to as an AP or a processor.

The UWBS 230 may be a hardware component including a UWB MAC Layer and a UWB Physical Layer. The UWBS 230 may perform UWB session management and may communicate with the UWBS of another UWB device. The UWBS 230 may interface with the Framework 120 through the second interface and may obtain the secure data from the Secure Component. In an embodiment, the Framework (or application processor) 220 may transmit a command to the UWBS 230 through UCI, and the UWBS 230 may transmit a response to the command to the Framework 220. The UWBS 230 may transfer a notification to the Framework 120 through the UCI.

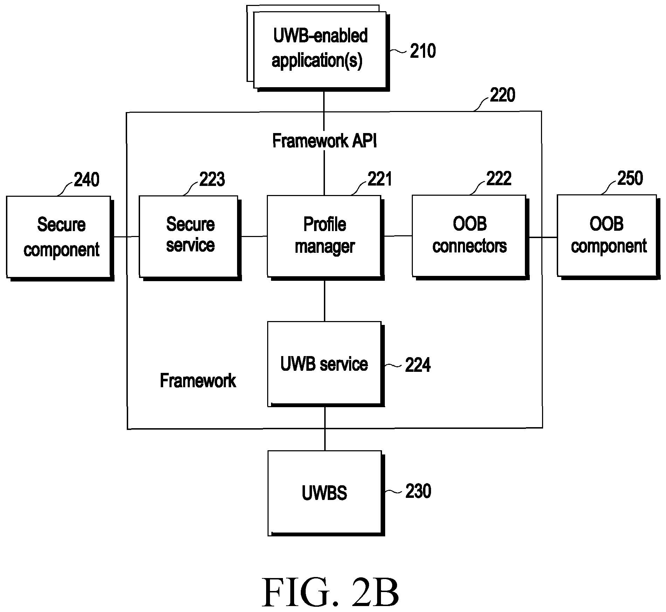

FIG. 2B illustrates an example configuration of a framework of a UWB device according to an embodiment of the disclosure.

The UWB device of FIG. 2B may be an example of the UWB device of FIG. 2A.

Referring to FIG. 2B, the Framework 220 may include, e.g., software components, such as Profile Manager 221, OOB Connector(s) 222, Secure Service 223 and/or UWB service 224.

The Profile Manager 221 may serve to manage profiles available on the UWB device. Profile may be a set of parameters required to establish communication between UWB devices. For example, a profile may include a parameter indicating which OOB secure channel is used, a UWB/OOB configuration parameter, a parameter indicating whether the use of a particular secure component is mandatory, and/or a parameter related to the file structure of the ADF. The UWB-enabled Application 210 may communicate with the Profile Manager 221 through the first interface (e.g., Framework (API)).

The OOB Connector 222 may serve to establish an OOB connection with another device. The OOB Connector 222 may handle an OOB step including a discovery step and/or a connection step. The OOB component (e.g., BLE component) 250 may be connected to the OOB connector 222.

The Secure Service 223 may play a role of interfacing with a Secure Component 240, such as SE or TEE.

The UWB Service 224 may perform a role of managing the UWBS 230. The UWB Service 224 may provide access to the UWBS 230 from the Profile Manager 321 by implementing the second interface.

The disclosure provides a method for performing pose detection using a UWB signal by an electronic device. The UWB signal may be a UWB signal used for DL-TDoA ranging (OWR) or a UWB signal used for DS-TWR ranging. In the disclosure, the pose may be, e.g., a pose related to where the user is holding the user device (e.g., handheld) or where the user is putting it (e.g., back pocket/front pocket).

The disclosure provides a method in which the electronic device receives a UWB signal to obtain UWB channel impulse response (CIR) data and classifies whether a UWB signal is a line of sight (LOS) signal or a non-LOS (NLOS) signal based on the UWB CIR data. For classification of LOS signals or NLOS signals, a convolutional neural network (CNN) algorithm (model) may be used. As such, the electronic device of the disclosure may have high classification accuracy by classifying data having time series characteristics using a CNN model. Effective CIR data where noise is removed from UWB CIR data may be used as input data to the CNN model used for classification of LOS signals or NLOS signals. Accordingly, the classification accuracy of the LOS/NLOS signal and the classification accuracy of the pose may be increased.

The disclosure provides a method for an electronic device to perform pose classification using a classification result (signal classification result) of an LOS signal or NLOS signal and sensing data. Data (IMU data) of an inertial measurement unit (IMU) sensor may be used as the sensing data. Two CNN models (e.g., two parallel CNN models) different from the CNN model used for classification of LOS/NLOS signals may be used to perform pose classification using signal classification results and sensing data. One of the two CNN models may be trained using IMU data (first training data) associated with the LOS signal, and the other CNN model may be trained using IMU data (second training data) associated with the NLOS signal. As described above, data having different characteristics may be classified using separate CNN models, thereby increasing classification accuracy.

The disclosure provides a method for the electronic device to filter prediction data output from each CNN model before the final LOS/NLOS signal classification and the final pose classification. For filtering, a moving average filter may be used. Accordingly, the classification accuracy of the LOS/NLOS signal and the classification accuracy of the pose may be increased.

The disclosure provides a method in which the classified LOS/NLOS signal and/or the classified pose may be used by various applications of the user device. For example, the classification method of the disclosure may be used in an application for tagless gate (smart gate), a digital car key application, or a point of service (POS) application. The application may appropriately provide a specific service or a function/parameter associated with the specific service using the accurately classified LOS/NLOS signal and/or the classified pose.

In an embodiment, the application may perform adaptive ranging frequency adjustment for power saving using the accurately classified LOS/NLOS signal. For example, the application may set the maximum sleep duration through adaptive ranging frequency adjustment using the classified LOS/NLOS signals.

In an embodiment, the application may increase the accuracy of position estimation by selectively using only the LOS signal through accurate LOS/NLOS signal classification.

In an embodiment, the application may set an adaptive access boundary through accurate classification of LOS/NLOS signals and poses.

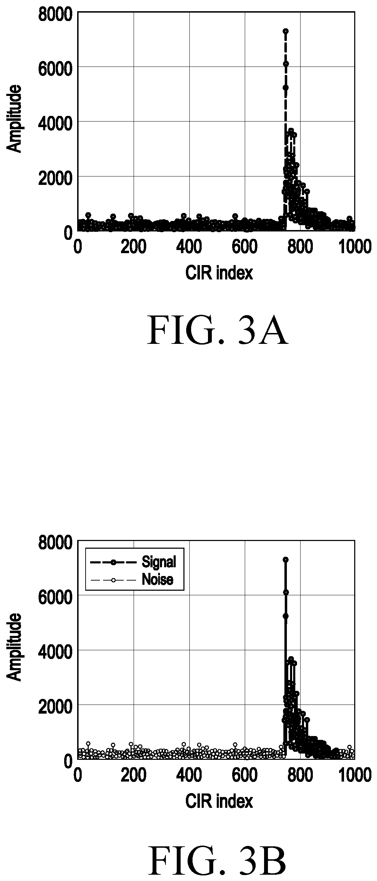

FIG. 3A illustrates an example of UWB CIR data according to an embodiment of the disclosure.

The UWB channel impulse response CIR may be obtained through reception of a UWB signal. For example, when receiving a UWB signal for DL-TDoA or a UWB signal for DS-TWR, the electronic device may obtain UWB CIR data based on the received signal. In the disclosure, the UWB CIR may be abbreviated as the CIR.

According to an embodiment, the electronic device may obtain UWB CIR data using a correlation value between the impulse function and the received UWB signal.

An example of UWB CIR data obtained based on the UWB signal may be as illustrated in FIG. 3A. As illustrated in FIG. 3A, e.g., 1016 CIR values may be output. Each CIR value may be, e.g., a value obtained or measured based on each UWB signal including a UWB message (e.g., an initiation message RIM or a final message RFM) from an initiator (e.g., a smart gate) received by a responder (e.g., the user device) during a DS-TWR process. Alternatively, each CIR value may be, e.g., a value obtained or measured based on each UWB signal including a UWB message (DTM) from a UWB anchor (e.g., an initiation message or final message from the initiator anchor or a response message from the responder anchor) received by the user device (tag device) during the DL-TDoA process.

Referring to FIG. 3A, an amplitude peak may occur after a specific CIR index (e.g., the CIR index 750).

FIG. 3B illustrates an example of effective UWB CIR data according to an embodiment of the disclosure.

In the disclosure, the effective UWB CIR may mean a CIR having a meaningful value among the CIRs. In other words, the effective UWB CIR may be a CIR obtained or measured by an actual signal other than noise. In the disclosure, the effective UWB CIR may be referred to as an effective CIR (eCIR).

According to an embodiment, the electronic device may treat CIR values before the peak occurs as noise, and treat n CIR values from the peak as eCIR.

According to an embodiment, the electronic device may determine n CIRs from the CIR index obtained by subtracting a margin value from the CIR index where a peak occurs, as eCIRs. For example, when a peak occurs at the CIR index 750 and the margin value is set to 5 (margin = 5), and n is set to 200 (n = 200), the electronic device may identify CIRs from CIR index 745 to CIR index 945 as eCIRs. Thus, CIRs may be classified into signals and noise, and an example of such classification may be as illustrated in FIG. 3B.

When eCIRs are classified from the obtained CIRs and only eCIRs are used as input data to the CNN model for classification of LOS/NLOS signals, inaccurate noise may be removed to increase the accuracy of classification.

Further, when eCIRs are classified from the obtained CIRs and used, the latency for exchanging CIR data may be optimized.

Further, when eCIRs are classified from the obtained CIRs and used, the input matrix may be optimized to enhance the terminal's processing efficiency.

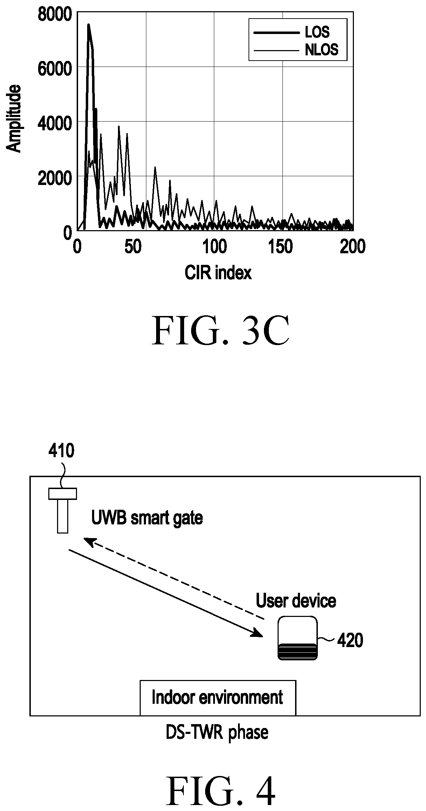

FIG. 3C illustrates an example of a LOS signal and an NLOS signal classified using UWB CIR data according to an embodiment of the disclosure.

As described above, the CIR values used for classification of LOS signals/NLOS signals may be eCIR values. For example, as illustrated in FIG. 3C, n (e.g., 200) eCIR values may be used for classification of LOS/NLOS signals.

Meanwhile, CIR values (eCIR values) of LOS signals and NLOS signals may have different characteristics from each other.

For example, the LOS signal may have at least one of the following characteristics.

- Peak value of CIR is higher than peak value of NLOS signal
- CIR value drops quickly to noise level after peak value
- A smaller number of, e.g., one or two, peaks occur

For example, the NLOS signal may have at least one of the following characteristics.

- Peak value of CIR is lower than peak value of LOS signal
- After the peak value, the CIR value takes a long time to drop to the noise level
- Multiple peak values appear due to multipath signal

Due to the difference in characteristics of the CIR value of the LOS signal and the NLOS signal, whether the corresponding signal is an LOS signal or an NLOS signal may be classified using the measured CIR data (eCIR data).

According to an embodiment, the electronic device may use a deep learning algorithm to classify whether the corresponding signal is an LOS signal or an NLOS signal using CIR data (eCIR data) for the corresponding signal. For example, the electronic device may perform classification of LOS/NLOS signals using a CNN model (CNN algorithm). A method for classifying LOS/NLOS signals using a CNN model is described below with reference to FIGS. 4 to 11.

Hereinafter, for convenience of description, it is assumed that four cases for generating data used for classification of LOS/NLOS signals and/or classification of poses are classified as follows.

(1) Handheld (LOS) case (handheld (LOS) pose): A case in which the user holds the electronic device in his hand (handheld) and does not cover the UWB antenna of the electronic device.

(2) Hand NLOS case (handheld (NLOS) pose): A case in which the user holds the electronic device in his hand and covers the UWB antenna of the electronic device.

(3) Front pocket (LOS) case (Front pocket (LOS) pose): A case in which the electronic device is in the user's front pocket, guaranteeing LOS signals.

(4) Back pocket (NLOS) case (Back pocket (NLOS) pose) : A case in which the electronic device is in the user's back pocket, blocking signals by the body effect.

A large amount of data (e.g., UWB CIR data and/or IMU sensor data) for the above four cases may be collected as training data in various environments (e.g., an environment in which the user's electronic device (user device) moves close to (approaches) the initiator (e.g., the initiator for DS-TWR or initiator anchor for DL-TDoA) for UWB ranging). The collected training data may be used for training each CNN model. However, the embodiments are not limited thereto, and according to an embodiment, data from other environments and/or other cases may be collected and used for training the CNN model.

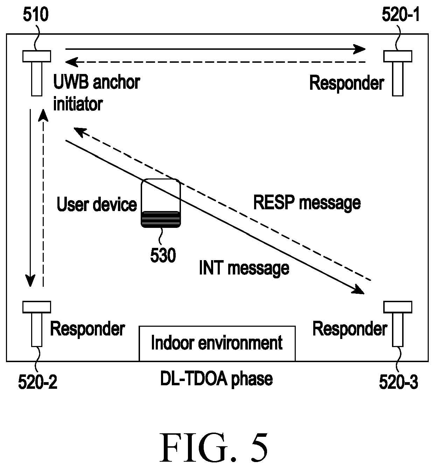

First, referring to FIGS. 4 and 5, examples of environments (scenarios) to which LOS/NLOS classification is applicable, e.g., DS-TWR in FIG. 4 and DL-TDoA in FIG. 5 are described. A large amount of data collected in advance in the DS-TWR scenario and/or DL-TDoA scenario to be described below may be used in the training procedure for the CNN model, and data collected in real-time may be used in the test procedure for the CNN model.

FIG. 4 illustrates a DS-TWR scenario according to an embodiment of the disclosure.

Referring to FIG. 4, DS-TWR may be performed between the first electronic device 410 and the second electronic device 420.

In the embodiment of FIG. 4, for convenience of description, it is assumed that the first electronic device 410 (e.g.,

a smart gate) serves as a controller/initiator for DS-TWR, and the second electronic device 420 (e.g., a user device) which is the user's electronic device serves as a controlee/responder for DS-TWR, but the disclosure is not limited thereto. In this case, it is assumed that the second electronic device 420 approaches the first electronic device 410 which is the initiator.

In an embodiment, the first electronic device 410 may be, e.g., a UWB-based gate (UWB smart gate), and the second electronic device 420 may be the user's electronic device (e.g., the user's smartphone).

Referring to FIG. 4, in one ranging cycle (one ranging measurement cycle), the first electronic device 410 as an initiator may initiate a DS-TWR ranging procedure by transmitting a ranging initiation message RIM, the second electronic device 420 as a responder may transmit a ranging response message RRM which is a response message to the RIM, to the first electronic device 410, and the first electronic device 410 may transmit a ranging final message RFM which is a response message to the RRM to the second electronic device 420. One ranging measurement cycle for such DS-TWR may be performed repeatedly (e.g., periodically).

According to an embodiment, the RIM may include a transmission timestamp indicating the transmission time of the RIM. In an embodiment, the RRM may include a transmission timestamp indicating the transmission time of the RRM and response time information indicating the time between the reception time of the RIM and the transmission time of the RRM. In an embodiment, the RFM may include a transmission timestamp indicating the transmission time of the RFM and response time information indicating the time between the reception time of the RRM and the transmission time of the RFM.

According to an embodiment, the second electronic device 420 may obtain a CIR value for each of the UWB signals including the received TWR message (e.g., RFM). The obtained CIR data may be used for classification of LOS/NLOS signals.

In an embodiment, the second electronic device 420 may obtain sensing data of the IMU sensor together with CIR data. In an embodiment, an acquisition period of IMU sensor data may be different (e.g., smaller) from an acquisition period of CIR data. In this case, in order to input IMU sensor data corresponding to CIR data as an input to the CNN model, it may be necessary to perform a sequencing operation.

FIG. 5 illustrates a DL-TDoA scenario according to an embodiment of the disclosure.

In the embodiment of FIG. 5, for convenience of description, a DL-TDoA environment including four UWB anchors 510, 520-1, 520-2, and 520-3 and one user's electronic device (user device) 530 is assumed, but the numbers of UWB anchors and user devices are not limited thereto. In this case, it is assumed that one initiator anchor (initiator UWB anchor) 510 and three responder anchors (responder UWB anchors) 520-1, 520-2, and 520-3 are used for DL-TDoA. Further, it is assumed that the user device 530 approaches the initiator anchor 510, which is the initiator. However, embodiments are not limited thereto.

Referring to FIG. 5, in one ranging cycle (one ranging measurement cycle), the initiator anchor 510 as an initiator may initiate a DL-TDoA ranging procedure by transmitting an initiation message (poll DTM), the responder anchors 520-1, 520-2, and 520-3, as responders, may each transmit a response message (response DTM) to the initiator anchor 510, and the initiator anchor 510 may transmit a final message (final DTM), which is a response message to the response message, to each responder anchor 520-1, 520-2, and 520-3.

In an embodiment, the poll DTM may further include a transmission timestamp, which indicates the time when the poll DTM is transmitted. The poll DTM may further include the round index of the current ranging round in which the poll DTM is transmitted and the block index of the current ranging block. The poll DTM may further include position information about the UWB anchor transmitting the poll DTM.

In an embodiment, each response DTM may include response time information indicating the time between the time when the poll DTM is received and the time when the corresponding response DTM is transmitted. Each response DTM may include a transmission time (transmission timestamp) indicating the time when the response DTM is transmitted. Each response DTM may further include the round index of the current ranging round in which the corresponding response DTM is transmitted and the block index of the current ranging block. Each response DTM may further include position information about the UWB anchor transmitting the corresponding response DTM.

In an embodiment, the final DTM may include a response time indicating the time between the time of receiving each response DTM and the time of transmitting the final DTM. In other words, the final DTM may include a list of response times, and the list may include a response time indicating the time between the time of receiving each response DTM and the time of transmitting the final DTM. The final DTM may include a transmission time (transmission timestamp) indicating the time when the final DTM is transmitted. The final DTM may further include the round index of the current ranging round in which the final DTM is transmitted and the block index of the current ranging block.

The user device 530 may receive the initiation message, response messages, and final messages, calculate TDoA values between the initiator anchor 510 and each responder anchor 520-1, 520-2, and 520-3, and estimate its position using the TDoA values and the known positions of the anchors. In an embodiment, information about the positions of anchors may be transferred through UWB in-band communication (e.g., DTM message) or through UWB out-of-band communication (e.g., BLE communication).

In an embodiment, the user device 530 may obtain a CIR value for each of the UWB signals including the received DMT (e.g., final DTM). The obtained CIR data may be used for classification of LOS/NLOS signals.

In an embodiment, the user device 530 may obtain sensing data of the IMU sensor together with CIR data. In an embodiment, an acquisition period of IMU sensor data may be different (e.g., smaller) from an acquisition period of CIR data. In this case, in order to input IMU sensor data corresponding to CIR data as an input to the CNN model, it may be necessary to perform a sequencing operation.

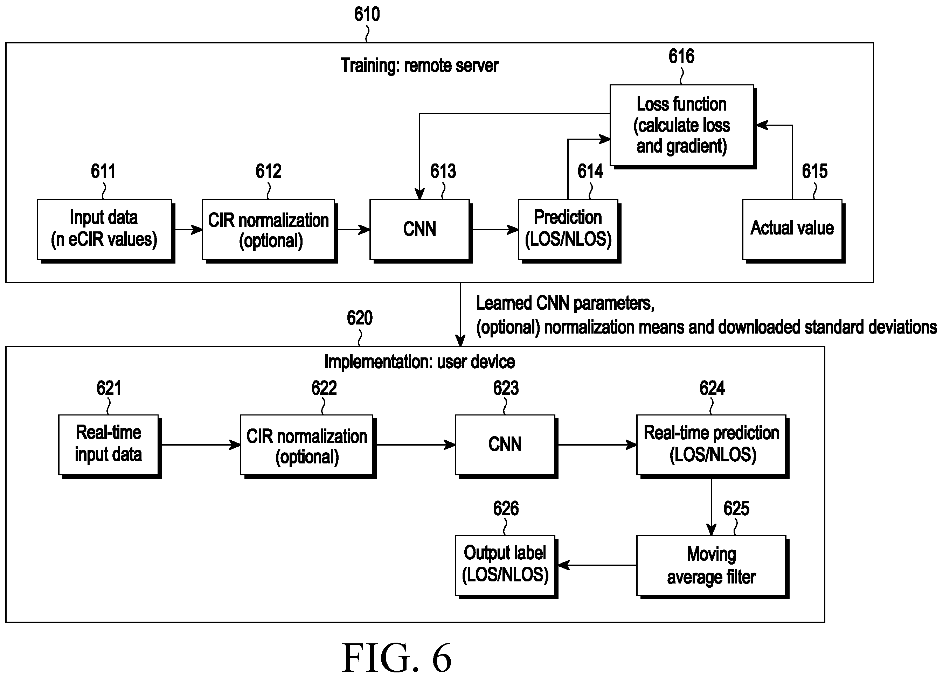

FIG. 6 illustrates a procedure for LOS/NLOS signal classification using UWB channel impulse response data according to an embodiment of the disclosure.

In the embodiment of FIG. 6, for convenience of description, it is assumed that a training procedure 610 is performed on a remote server, and a test procedure/implementation procedure 620 is performed on a user device. However, embodiments are not limited thereto. For example, if the user device is a device with high computing power, the training procedure may also be performed on the user device.

First, the training procedure 610 is described with reference to FIG. 6. In the disclosure, the training procedure may be a procedure for training a model for LOS/NLOS classification using pre-collected training data (e.g., pre-collected training data in the environment (scenario) of FIG. 4/5). The model of the disclosure may be a CNN-based model.

In the training procedure 610, the remote server (server) may collect input data (611). For example, the server may collect CIR data (e.g., eCIR data including n eCIR values) as input data for training.

The server may perform CIR normalization processing on the collected input data (612). For example, the server may normalize the collected input data between 0 and 1. However, the CIR normalization of operation 612 may be omitted as an operational operation.

The server may input CIR-normalized data or CIR-unnormalized data as input data to the CNN model, and may perform processing for LOS/NLOS classification using the CNN model (613). The CNN model may classify the input data into values of a plurality of output labels. For example, the CNN model may output the input data as a probability value (e.g., label 1) corresponding to the LOS signal and a probability value (e.g., label 2) corresponding to the NLOS signal.

Tables 1 and 2 below show examples of characteristics (architecture) and hyperparameters of the CNN model used for LOS/NLOS classification.

[Table 1]

| LAYER | NUMBER OF FILTERS | FILTER SIZE | ACTIVATION FUNCTION |
|---|---|---|---|
| Conv1D | 64 | 5 | - |
| Instance Normalization | - | - | ReLU |
| MaxPool1D | - | 2 | - |
| Conv1D | 128 | 11 | - |
| Instance Normalization | - | - | ReLU |
| MaxPool1D | - | 2 | - |
| Conv1D | 256 | 17 | - |
| Instance Normalization | - | - | ReLU |
| MaxPool1D | - | 2 | - |
| Conv1D | 512 | 5 | - |
| Instance Normalization | - | - | ReLU |
| MaxPool1D | - | 2 | - |
| Flatten | - | - | - |
| Dense | - | - | sigmoid |

[Table 2]

| Weights Initializer | Random |
|---|---|
| Solver | Adam |
| Maximum number of Training Epochs | 100 |
| Batch Size | 50 |
| Shuffle | Every Epoch |

(continued)

| Dropout | 0.2 |
|---|---|
| Loss Function | Binary Cross-entropy |

The server may obtain a prediction value output from the CNN model (614). In an embodiment, the prediction value may include a predicted probability value (e.g., a first prediction value) for the label (e.g., label 1) corresponding to the LOS signal and a predicted probability value (a second prediction value) for the label (e.g., label 2) corresponding to the NLOS signal.

The server may obtain an actual value (ground truth value) for the corresponding signal (signal corresponding to input data) (615). In an embodiment, the actual value may include an actual value for a label (e.g., label 1) corresponding to the LOS signal and/or an actual value for a label (e.g., label 2) corresponding to the NLOS signal.

The server may calculate a loss function based on an error between the prediction value of operation 614 and the actual value of operation 615 (616). In an embodiment, the server may calculate the overall error based on the error between the prediction value and the actual value for the LOS signal and the error between the prediction value and the actual value for the NLOS signal.

The server may back-propagate the calculated loss function to update the parameters of the CNN model in the direction of reducing errors. The updated parameters may be used in the CNN model for processing the next input data (e.g., the next n eCIR values).

The server may perform the above-described training procedure 610 on each of all the collected input data sets (e.g., each input data set includes n eCIR values), continuously updating the parameters of the CNN model (CNN parameters) in the direction of reducing errors. The user device may obtain or download the trained CNN parameters. Further, the user device may download information about whether normalization is used. Further, the user device may download standard deviations related to the CNN model.

Hereinafter, the test procedure/implementation procedure 620 is described with reference to FIG. 6. In the disclosure, the test procedure may be a procedure for testing a model trained using actual data (e.g., real-time data), and the implementation procedure may be a procedure for actually implementing LOS/NOS classification using a model trained using actual data (e.g., real-time data).

In the test procedure/implementation procedure 620, the user device may collect real-time input data (621). For example, the user device may collect a plurality of CIR values (e.g., eCIR values) in real-time as input data and process them with them divided into a preset number of lengths (sizes) (e.g., n lengths). In an embodiment, the length n may be the same as the length n used for training.

The user device may perform CIR normalization on the collected input data (622). For example, the user device may normalize the collected input data between 0 and 1. However, the CIR normalization in operation 622 may be omitted as an optional operation.

The user device may input CIR-normalized data or CIR-unnormalized data as input data to the CNN model, and may perform processing for LOS/NLOS classification using the CNN model (623). The CNN model of the user device may use CNN parameters obtained through the training procedure 610 for processing input data. The CNN model may classify the input data into values of a plurality of output labels. For example, the CNN model may output the input data as a probability value (e.g., label 1) corresponding to the LOS signal and a probability value (e.g., label 2) corresponding to the NLOS signal.

The user device may obtain prediction data (real-time prediction data) outputted from the CNN model (624). In an embodiment, the prediction data output from the CNN model may include a prediction value (first prediction value) for first eCIR data (first n eCIR data among the real-time input data), a prediction value (second prediction value) for second eCIR data (second n eCIR data among the real-time input data), ... , a prediction value (nth prediction value) for nth eCIR data (nth n eCIR data among the real-time input data). In an embodiment, each prediction value may include a predicted probability value for a label (e.g., label 1) corresponding to the LOS signal and/or a predicted probability value for a label (e.g., label 2) corresponding to the NLOS signal for the corresponding eCIR data.

The user device may filter the prediction value (prediction data) using a filter (e.g., a low pass filter (LPF) or a moving average filter) (625). In an embodiment, the moving average filter may have a window length parameter indicating the length of the window used to calculate the average of the data as a hyperparameter. The user device may filter prediction data using a moving average filter having a window length parameter. For example, the user device may filter the prediction data by replacing each data point in the prediction data with an average of as many data points as the number designated by the window_length including the corresponding data point.

The user device may obtain an output label for real-time input data using the filtered data (626). The user device may finally determine whether the output label for the signal corresponding to the real-time input data is a label (e.g., label 1) corresponding to the LOS signal or a label (e.g., label 2) corresponding to the NLOS signal, using the filtered data. Accordingly, the user device may finally classify whether the corresponding signal is an LOS signal or an NLOS signal.

Thus, the classification accuracy of LOS/NLOS signals may be increased by providing filtering using a moving average filter for prediction data output from the CNN model before the final LOS/NLOS signal classification.

Table 3 below illustrates the comparison of accuracy of LOS/NLOS classification when an LPF filter (e.g., a moving average filter) is used and not used under the same conditions.

[Table 3]

|  | Hand (LOS) | Front pocket (LOS) | Hand (NLOS) | Back pocket (NLOS) |
|---|---|---|---|---|
| w/o LPF | 87.4% | 78.8% | 99.8% | 75.4% |
| w/ LPF | 99.4% | 92.0% | 100% | 90.6% |

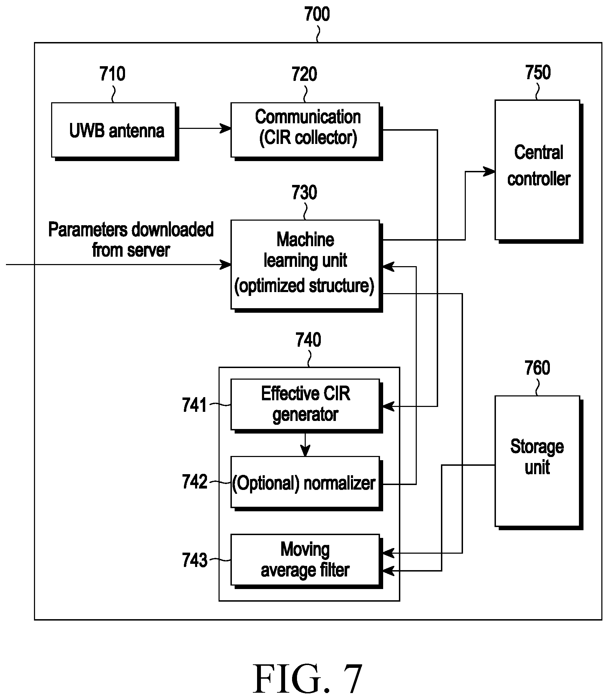

FIG. 7 illustrates a configuration of a user device for LOS/NLOS classification according to an embodiment of the disclosure.

The user device 700 of FIG. 7 may be an example of a user device performing the test procedure/implementation procedure 620 of FIG. 6.

Referring to FIG. 7, the user device 700 may include a UWB antenna 710, a CIR collector 720, a machine learning unit 730, a classification processing unit 740, a central control unit 750, and/or a storage unit 750. The classification processor 740 may include an effective CIR generator 741, a normalizer 742, and a moving average filter 743.

According to an embodiment, some of the above-described components may be omitted or additional components may be further included. According to an embodiment, two or more of the above-described components may be merged into one component. According to an embodiment, all or some of the above-described components may be implemented by at least one processor (or controller). For example, the components except for the UWB antenna 710 and the storage unit 750 may be implemented by at least one processor (or controller).

The UWB antenna 710 may transmit/receive a UWB signal. In an embodiment, the UWB antenna 710 may receive at least one UWB signal for UWB ranging from another electronic device. For example, the UWB antenna 710 may receive at least one UWB signal for DS-TWR or at least one UWB signal for DL-TDoA.

The CIR collector 720 may collect CIR data from at least one UWB signal received through the UWB antenna 710. The CIR collector 720 may transfer the collected CIR data to the effective CIR generator (informative CIR generator) 741. The collected CIR data may include a plurality of CIR values.

The effective CIR generator 741 may generate effective CIR data from the collected CIR data. The effective CIR generator 741 may transfer the generated effective CIR data to the normalizer 742 or may directly transfer the generated effective CIR data to the machine learning unit 730. The effective CIR data may include a plurality of effective CIR values, and may be processed by the machine learning unit 730 in a preset number of units (e.g., n units).

The normalizer 742 may normalize the values of the effective CIR (eCIR) data. For example, the normalizer 742 may normalize the values of the effective CIR data to values between 0 and 1. The normalizer 742 may have an optional component. For example, even if the normalizer 742 is not included in the user device 700, or is included in the user device 700, the processing of the normalizer 742 may be omitted.

The machine learning unit 730 may generate prediction data using the input effective CIR data. According to an embodiment, the machine learning unit 730 may generate prediction data using a CNN model. In an embodiment, the CNN parameters of the CNN model may be downloaded from a server on which a training procedure has been performed in advance. Therefore, the machine learning unit 730 may use an optimized CNN model.

In an embodiment, the machine learning unit 730 may perform processing in units of a preset number of eCIRs (e.g., n eCIRs) (eCIR set) to output each prediction value for the corresponding eCIR set. For example, the prediction data may include a first prediction value (first prediction value) for first n eCIRs (first eCIR set), a prediction value (second prediction value) for next n eCIRs (second eCIR set), ... , a prediction value (nth prediction value) for nth n eCIRs (nth eCIR set). Each prediction value may include a predicted probability value corresponding to the LOS and a predicted probability value corresponding to the NLOS with respect to a corresponding eCIR set.

The machine learning unit 730 may transfer the prediction data to the central controller 750 and/or the moving average filter 743.

The central controller 750 may transfer the received prediction data to the storage unit 730. The storage unit 730 may store the received prediction data and transfer the stored prediction data to the moving average filter 743.

The moving average filter 743 may calculate an average value based on a preset window length parameter using prediction data (e.g., current prediction data) received from the machine learning unit 730 and prediction data (e.g., previous prediction data) received from the storage unit 760, and filter the prediction data using the average value. The filtered prediction data may be used for final classification into an LOS signal or an NLOS signal. The filtered prediction data may be used by various applications.

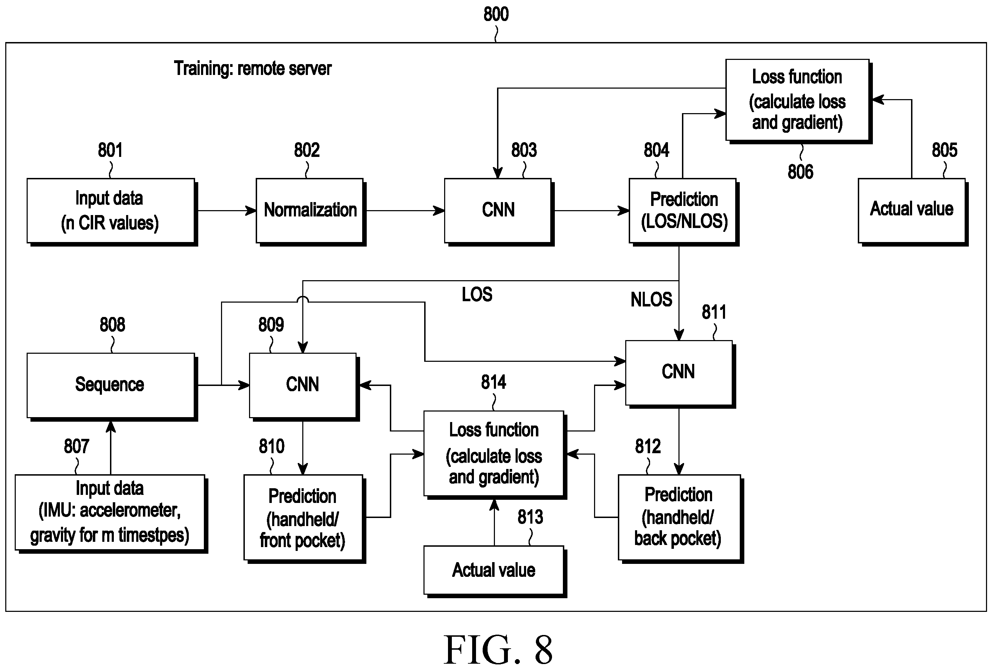

FIG. 8 illustrates a training procedure for pose classification based on LOS/NLOS signal classification using UWB channel impulse response data according to an embodiment of the disclosure.

In an embodiment of FIG. 8, for convenience of description, it is assumed that a training procedure 810 is performed on a remote server. However, embodiments are not limited thereto. For example, if the user device is a device with high computing power, the training procedure may also be performed on the user device.

First, the training procedure 800 is described with reference to FIG. 8. In the disclosure, the training procedure may be a procedure for training a model for pose classification using pre-collected training data (e.g., pre-collected training data in the environment (scenario) of FIG. 4/5). The model of the disclosure may be a CNN-based model.

In the training procedure 800, the remote server (server) may collect input data (801). For example, the server may collect CIR data (e.g., eCIR data including n eCIR values) as input data for training.

The server may perform CIR normalization on the collected input data (802). For example, the server may normalize the collected input data between 0 and 1. However, the CIR normalization of operation 802 may be omitted as an operational operation.

The server may input CIR-normalized data or CIR-unnormalized data as input data to the first CNN model, and may perform processing for LOS/NLOS classification using the first CNN model (803). The first CNN model may classify the input data into values of a plurality of output labels. For example, the CNN model may output the input data as a probability value (e.g., label a) corresponding to the LOS signal and a probability value (e.g., label b) corresponding to the NLOS signal. In the disclosure, the first CNN model refers to a CNN model used for LOS/NLOS classification.

The server may obtain the prediction value (first prediction value or first prediction information) output from the first CNN model (804). In an embodiment, the first prediction value may include a predicted probability value for a label (e.g., label a) corresponding to the LOS signal and/or a predicted probability value for a label (e.g., label b) corresponding to the NLOS signal.

The server may obtain the actual value (ground truth value) (first actual value or first actual information) (805) for the corresponding signal. In an embodiment, the first actual value may include an actual value for a label (e.g., label a) corresponding to the LOS signal and/or an actual value for a label (e.g., label b) corresponding to the NLOS signal.

The server may calculate a loss function based on an error (or loss) between the prediction value of operation 804 and the actual value of operation 805 (loss and gradient computation) (806). In an embodiment, the server may calculate the overall error based on the error between the prediction value and the actual value for the LOS signal and the error between the prediction value and the actual value for the NLOS signal.

The server may back-propagate the calculated loss function to update the parameters of the first CNN model in the direction of reducing errors. The updated parameters may be used in the first CNN model for processing the next input data (e.g., the next n eCIR values).

The server may perform the above-described training procedure 800 on each of all the collected eCIR sets (e.g., each eCIR set includes n eCIR values), continuously updating the parameters of the first CNN model (CNN parameters) in the direction of reducing errors. The user device may obtain or download the CNN parameters for the trained first CNN model. Further, the user device may download information about whether normalization is used. Further, the user device may download standard deviations related to the first CNN model.

The server may determine whether the signal corresponding to the eCIR set is classified as an LOS signal or an NLOS signal based on the prediction value for the eCIR set. For example, when the predicted probability value corresponding to the LOS signal is larger than the predicted probability value corresponding to the NLOS signal in the prediction value for the eCIR set, the server may determine that the signal corresponding to the eCIR set is classified as an LOS signal. As another example, when the predicted probability value corresponding to the NLOS signal is larger than the predicted probability value corresponding to the LOS signal in the prediction value for the corresponding eCIR set, the server may determine that the signal corresponding to the eCIR set is classified as an NLOS signal.

When a signal corresponding to the eCIR set is classified as an LOS signal, the server may perform a classification procedure for pose detection based on a second CNN model. Alternatively, when a signal corresponding to the eCIR set is classified as an NLOS signal, the server may perform a classification procedure for pose detection based on a third CNN model. In the disclosure, the second CNN model refers to a CNN model used for pose classification trained using IMU sensor data associated with the LOS signal. In the disclosure, the third CNN model refers to a CNN model used for pose classification trained using IMU sensor data associated with the NLOS signal.

Tables 4 and 5 below show examples of characteristics (architecture) and hyperparameters of the CNN model (second CNN model/third CNN model) used for pose classification.

[Table 4]

| LAYER | NUMBER OF FILTERS | FILTER SIZE | ACTIVATION FUNCTION |
|---|---|---|---|
| Conv1D | 64 | 2 | - |
| Instance Normalization | - | - | ReLU |

EP 4 589 325 A1

(continued)

| LAYER | NUMBER OF FILTERS | FILTER SIZE | ACTIVATION FUNCTION |
|---|---|---|---|
| MaxPool1D | - | 2 | - |
| Conv1D | 128 | 2 | - |
| Instance Normalization | - | - | ReLU |
| MaxPool1D | - | 2 | - |
| Conv1D | 256 | 2 | - |
| Instance Normalization | - | - | ReLU |
| MaxPool1D | - | 2 | - |
| Flatten | - | - | - |
| Dense | - | - | sigmoid |

[Table 5]

| Weights Initializer | Random |
|---|---|
| Solver | Adam |
| Maximum number of Training Epochs | 100 |
| Batch Size | 10 |
| Shuffle | Every Epoch |
| Dropout | 0.2 |
| Loss Function | Binary Cross-entropy |

The server may collect sensor input data (e.g., IMU data) (807). The sensor input data may be sensor input data (first sensor input data) associated with the LOS signal or sensor input data (second sensor input data) associated with the NLOS signal. For example, sensor data collected in the above-described environment without covering the UWB antenna or with it put in the front pocket may be sensor input data (first sensor input data) associated with the LOS signal, and sensor data collected in the above-described environment while covering the UWB antenna or with it put in the back pocket may be sensor input data (second sensor input data) associated with the NLOS signal.

In an embodiment, the sensor input data may include IMU values (m time series IMU values) for m timestpes.

The server may perform sequencing to input sensor input data corresponding to input data to the first CNN model to the second CNN model or the third CNN model (808). For example, the server may perform sequencing to input sensor input data collected during the same period as the period in which input data including n eCIR values was collected into the second CNN model or the third CNN model.

When the signal is classified as an LOS signal, the server may input the sequenced first sensor input data (first sensor input sequence) as input data for training the second CNN model, and may perform processing for pose classification using the second CNN model (809). For example, the second CNN model may use input data to predict whether the pose for the sensor input data is a first pose (e.g., handheld) or a second pose (e.g., front pocket). The server may obtain the prediction value (second prediction value or second prediction information) output from the second CNN model (810). In an embodiment, the prediction value may include a predicted probability value for a label (e.g., label 1) corresponding to a first pose (e.g., handheld (LOS)) and a predicted probability value for a label (e.g., label 2) corresponding to a second pose (e.g., front pocket (LOS)) for the first sensor input data associated with the LOS.

When the signal is classified as an NLOS signal, the server may input the sequenced second sensor input data (second sensor input sequence) as input data for training the third CNN model, and may perform processing for pose classification using the third CNN model (811). For example, the third CNN model may use input data to predict whether the pose for the sensor input data is a third pose (e.g., handheld (NLOS)) or a fourth pose (e.g., back pocket (NLOS)). The server may obtain the prediction value (second prediction value or second prediction information) output from the third CNN model (812). In an embodiment, the prediction value may include a predicted probability value for a label (e.g., label 3) corresponding to a third pose (e.g., handheld (NLOS)) and a predicted probability value for a label (e.g., label 4) corresponding to a fourth pose (e.g., back pocket (NLOS)) for the second sensor input data associated with the LOS.

The server may obtain the actual value (ground truth value) (second actual value or second actual information) (813) for the corresponding pose. In an embodiment, the second actual value may include an actual value for a label (e.g.,

19

label 1) corresponding to the first pose, an actual value for a label (e.g., label 2) corresponding to the second pose, an actual value for a label (e.g., label 3) corresponding to the third pose, and/or an actual value for a label (e.g., label 4) corresponding to the fourth pose.

The server may calculate a loss function based on an error (or loss) between the second prediction value of operation 810 and the second actual value of operation 813, and/or calculate a loss function based on an error (or loss) between the third prediction value of operation 812 and the second actual value of operation 813 (814).

The server may back-propagate the calculated loss function and update the parameters of the corresponding CNN model (the second CNN model or the third CNN model) in a direction of reducing errors. For example, the server may update the parameters of the second CNN model by back-propagating the loss function obtained based on the second prediction value of operation 810 and the second actual value of operation 813. Alternatively, the server may update the parameters of the third CNN model by back-propagating the loss function obtained based on the third prediction value of operation 812 and the second actual value of operation 813. As such, the server may update the parameters of the corresponding CNN model in the direction of reducing errors using a back-propagation method.

The updated parameters may be used in the corresponding CNN model for processing the next input data (e.g., the next m IMU sensing values).

The server may perform the above-described training procedure 800 on all collected IMU sensor data sets (e.g., each IMU sensor data set includes m IMU sensing values) to continuously update the parameters (CNN parameters) of the second CNN model and the third CNN model in the direction of reducing errors. The user device may obtain or download CNN parameters for the trained second CNN model and third CNN model.

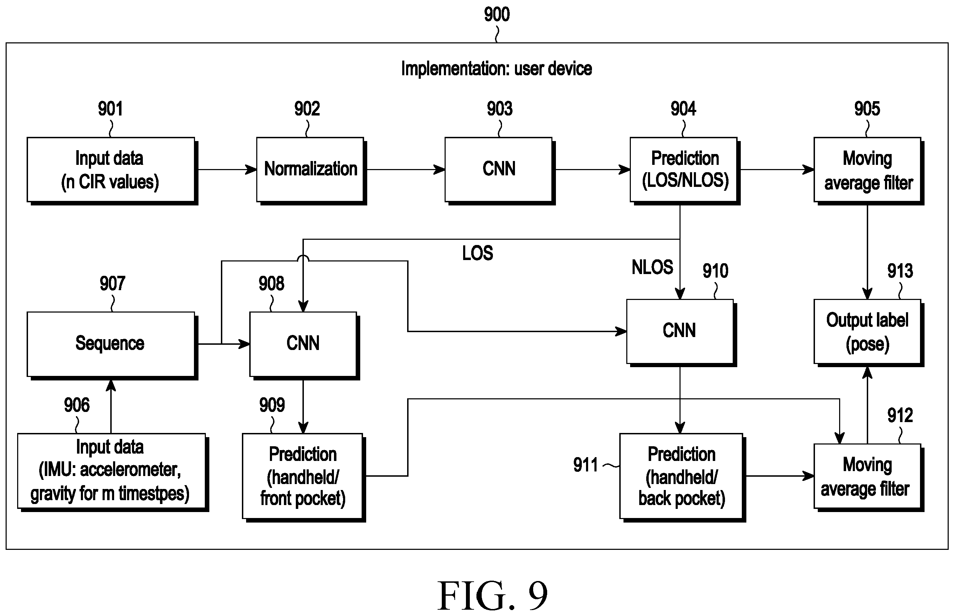

FIG. 9 illustrates a procedure by a user device, for pose classification based on a LOS/NLOS signal classification using UWB channel impulse response data according to an embodiment of the disclosure.

In the embodiment of FIG. 9, for convenience of description, it is assumed that the test procedure/implementation procedure 900 is performed on the user device. In the disclosure, the test procedure may be a procedure for testing a model trained using actual data (e.g., real-time data), and the implementation procedure may be a procedure for actually implementing LOS/NOS classification using a model trained using actual data (e.g., real-time data).

First, referring to FIG. 9, the test procedure/implementation procedure 900 is described with reference to FIG. 9.

In the test procedure/implementation procedure 900, the user device may collect input data (901). For example, the user device may collect a plurality of CIR values (e.g., eCIR values) in real-time as input data and process them with them divided into a preset number of lengths (sizes) (e.g., n lengths). In an embodiment, the length n may be the same as the length n used for training.

The user device may perform CIR normalization on the collected input data (902). For example, the user device may normalize the collected input data between 0 and 1. However, the CIR normalization in operation 902 may be omitted as an optional operation.

The user device may input CIR-normalized data or CIR-unnormalized data as input data to the first CNN model, and may perform processing for LOS/NLOS classification using the first CNN model (903). The first CNN model may classify the input data into values of a plurality of output labels. For example, the CNN model may output the input data as a probability value (e.g., label a) corresponding to the LOS signal and a probability value (e.g., label b) corresponding to the NLOS signal. In the disclosure, the first CNN model refers to a CNN model used for LOS/NLOS classification.

The user device may obtain the prediction value (first prediction value or first prediction information) output from the first CNN model (904). In an embodiment, the first prediction value may include a predicted probability value for a label (e.g., label a) corresponding to the LOS signal and/or a predicted probability value for a label (e.g., label b) corresponding to the NLOS signal.

The user device may perform the above-described LOS/NLOS classification procedure on each of all the collected eCIR sets (e.g., each eCIR set includes n eCIR values). The user device may perform filtering on prediction data (first prediction data) including each prediction value obtained from the first CNN model using the moving average filter (905).

The user device may determine whether the signal corresponding to the eCIR set is classified as an LOS signal or an NLOS signal based on the prediction value for the eCIR set. For example, when the predicted probability value corresponding to the LOS signal is larger than the predicted probability value corresponding to the NLOS signal in the prediction value for the eCIR set, the user device may determine that the signal corresponding to the eCIR set is classified as an LOS signal. As another example, when the predicted probability value corresponding to the NLOS signal is larger than the predicted probability value corresponding to the LOS signal in the prediction value for the corresponding eCIR set, the user device may determine that the signal corresponding to the eCIR set is classified as an NLOS signal.

When a signal corresponding to the eCIR set is classified as an LOS signal, the user device may perform a classification procedure for pose detection based on a second CNN model. Alternatively, when a signal corresponding to the eCIR set is classified as an NLOS signal, the user device may perform a classification procedure for pose detection based on a third CNN model. In the disclosure, the second CNN model refers to a CNN model used for pose classification trained using IMU sensor data associated with the LOS signal. In the disclosure, the third CNN model refers to a CNN model used for pose classification trained using IMU sensor data associated with the NLOS signal.

The user device may collect sensor input data (906). The sensor input data may be sensor input data (first sensor input data) associated with the LOS signal or sensor input data (second sensor input data) associated with the NLOS signal. In an embodiment, the sensor input data may include IMU values for m timestpes.

The user device may perform sequencing to input sensor input data corresponding to input data to the first CNN model to the second CNN model or the third CNN model (907). For example, the user device may perform sequencing to input sensor input data collected during the same period as the period in which input data including n eCIR values was collected into the second CNN model or the third CNN model.

When the signal is classified as an LOS signal, the user device may input the sequenced sensor input data (first sensor input sequence) as input data to the second CNN model, and may perform processing for pose classification using the second CNN model (908). For example, the second CNN model may use input data to predict whether the pose for the sensor input data is a first pose (e.g., handheld (LOS)) or a second pose (e.g., front pocket (LOS)). The user device may obtain the prediction value (second prediction value or second prediction information) output from the second CNN model (909). In an embodiment, the prediction value may include a predicted probability value for a label (e.g., label 1) corresponding to a first pose (e.g., handheld (LOS)) and a predicted probability value for a label (e.g., label 2) corresponding to a second pose (e.g., front pocket (LOS)) for the first sensor input data associated with the LOS.

When the signal is classified as an NLOS signal, the server may input the sequenced sensor input data (second sensor input sequence) as input data for training the third CNN model, and may perform processing for pose classification using the third CNN model (910). For example, the third CNN model may use input data to predict whether the pose for the sensor input data is a third pose (e.g., handheld (NLOS)) or a fourth pose (e.g., back pocket (NLOS)). The user device may obtain the prediction value (second prediction value or second prediction information) output from the third CNN model (911). In an embodiment, the prediction value may include a predicted probability value for a label (e.g., label 3) corresponding to a third pose (e.g., handheld (NLOS)) and a predicted probability value for a label (e.g., label 4) corresponding to a fourth pose (e.g., front pocket (NLOS)) for the second sensor input data associated with the NLOS.

The user device may perform the above-described pose classification procedure on each of all the collected IMU sensor data sets (e.g., each IMU sensor data set includes m IMU sensing values). The user device may perform filtering on prediction data (second prediction data) including each prediction value obtained from the second CNN model or on prediction data (third prediction data) including each prediction value obtained from the third CNN model using the moving average filter (912). Thus, the classification accuracy of LOS/NLOS signals and poses may be increased by providing filtering using a moving average filter for prediction data output from each CNN model before final LOS/NLOS signal classification and final pose classification.

The user device may determine a pose using the filtered first prediction data and the filtered second prediction data. For example, the filtered first prediction data and the filtered second prediction data may be used to determine whether the pose is a first pose (e.g., Hand (LOS) pose) or a second pose (e.g., Front (LOS).

Alternatively, the user device may determine a pose using the filtered first prediction data and the filtered third prediction data. For example, the filtered first prediction data and the filtered third prediction data may be used to determine whether the pose is a third pose (e.g., Hand (NLOS) pose) or a fourth pose (e.g., Back (NLOS)).

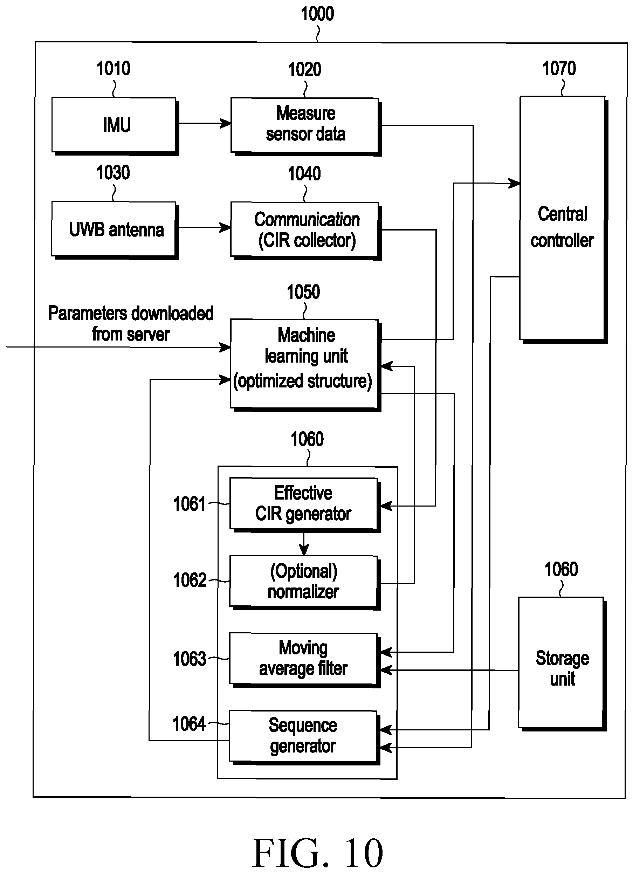

FIG. 10 illustrates a configuration of a user device for pose classification using LOS/NLOS classification according to an embodiment of the disclosure.

The user device 1000 of FIG. 10 may be an example of a user device performing the test procedure/implementation procedure 900 of FIG. 9.

Referring to FIG. 10, a user device 1000 may include an IMU sensor 1010, a sensor data collector 1020, a UWB antenna 1030, a CIR collector 1040, a machine learning unit 1050, a classification processor 1060, a central controller 1070 and/or a storage unit 1080. The classification processor 1060 may include an effective CIR generator 1061, a normalizer 1062, a moving average filter 1063, and/or a sequence generator 1064.

According to an embodiment, some of the above-described components may be omitted or additional components may be further included. According to an embodiment, two or more of the above-described components may be merged into one component. According to an embodiment, all or some of the above-described components may be implemented by at least one processor. For example, the components except for the IMU sensor 1010, the UWB antenna 1030, and the storage unit 1080 may be implemented by at least one processor (or controller).

The IMU sensor 1010 may sense the ambient environment. In an embodiment, the IMU sensor 1010 may be a sensor capable of measuring a specific force of the body, an angular rate, and/or an orientation of the body using a combination of an accelerometer, a gyroscope, and/or a magnetometer. The IMU sensor 1010 may transfer sensed data to the sensor data collector 1020.

The sensor data collector 1020 may transfer the collected sensor data to the sequence generator 1064.

The sequence generator 1064 may perform sequencing to input sensor input data corresponding to input data to the first CNN model to the second CNN model or the third CNN model. For example, the sequence generator 1064 may perform sequencing to input sensor input data collected during the same period as the period in which input data including n eCIR values was collected into the second CNN model or the third CNN model.

The UWB antenna 1030 may transmit/receive a UWB signal. In an embodiment, the UWB antenna 1030 may receive at least one UWB signal for UWB ranging from another electronic device. For example, the UWB antenna 1030 may receive at least one UWB signal for DS-TWR or at least one UWB signal for DL-TDoA.

The CIR collector 1040 may collect CIR data from at least one UWB signal received through the UWB antenna 1030. The CIR collector 1040 may transfer the collected CIR data to the effective CIR generator 1061. The collected CIR data may include a plurality of CIR values.

The effective CIR generator 1061 may generate effective CIR data from the collected CIR data. The effective CIR generator 1061 may transfer the generated effective CIR data to the normalizer 1062 or may directly transfer the generated effective CIR data to the machine learning unit 1050. The effective CIR data may include a plurality of effective CIR values, and may be processed by the machine learning unit 1050 in a preset number of units (e.g., n units).

The normalizer 1062 may normalize the values of the effective CIR (eCIR) data. For example, the normalizer 1062 may normalize the values of the effective CIR data to values between 0 and 1. The normalizer 1062 may have an optional component. For example, even if the normalizer 1062 is not included in the user device 1000, or is included in the user device 1000, the processing of the normalizer 1062 may be omitted.

The machine learning unit 1050 may generate prediction data using the input data. In an embodiment, the machine learning unit 730 may generate at least one prediction data using at least one CNN model, and CNN parameters of each CNN model may be downloaded from a server on which a training procedure has been performed in advance.

According to an embodiment, the machine learning unit 1050 may generate first prediction data for LOS/NLOS classification from the input effective CIR data using the first CNN model. In an embodiment, the first CNN model may perform processing in units of a preset number of eCIRs (e.g., n eCIRs) (eCIR set) to output each prediction value for the corresponding eCIR set. For example, the first prediction data may include a first prediction value (first prediction value) for first n eCIRs (first eCIR set), a prediction value (second prediction value) for next n eCIRs (second eCIR set), ... , a prediction value (nth prediction value) for nth n eCIRs (nth eCIR set). Each prediction value may include a predicted probability value corresponding to the LOS and a predicted probability value corresponding to the NLOS with respect to a corresponding eCIR set.

According to an embodiment, the machine learning unit 1050 may generate second prediction data for classification of the pose associated with LOS from the input sensor data using the second CNN model. In an embodiment, the second CNN model may perform processing in units of a preset number of sensing values (e.g., m sensing values) (sensor data sets) to output prediction values for each corresponding sensing data set. For example, the second prediction data may include a prediction value (first prediction value) for first m sensing values (first sensing data set), a prediction value (second prediction value) for next m sensing values (second sensing data set), ... , a prediction value (nth prediction value) for nth m sensing values (nth sensing data set). Each prediction value may include, for a corresponding sensing data set, a predicted probability value corresponding to the first pose and a predicted probability value corresponding to the second pose associated with the LOS.

According to an embodiment, the machine learning unit 1050 may generate third prediction data for classification of the pose associated with NLOS from the input sensor data using the third CNN model. In an embodiment, the third CNN model may perform processing in units of a preset number of sensing values (e.g., m sensing values) (sensor data sets) to output prediction values for each corresponding sensing data set. For example, the third prediction data may include a prediction value (first prediction value) for first m sensing values (first sensing data set), a prediction value (second prediction value) for next m sensing values (second sensing data set), ... , a prediction value (nth prediction value) for nth m sensing values (nth sensing data set). Each prediction value may include, for a corresponding sensing data set, a predicted probability value corresponding to the first pose and a predicted probability value corresponding to the second pose associated with the NLOS.

The machine learning unit 1050 may transfer prediction data (e.g., first prediction data, second prediction data, and/or third prediction data) to the central controller 1070 and/or the moving average filter 1064.

The central controller 1070 may transfer the received prediction data to the storage unit 1080. The storage unit 1080 may store the received prediction data and transfer the stored prediction data to the moving average filter 1064.

The moving average filter 1064 may filter each prediction data. The filtered prediction data may be used for final pose classification. The filtered prediction data may be used by various applications. In an embodiment, the application may provide different services or service-related parameters (e.g., threshold) according to the pose classified based on the filtered prediction data.

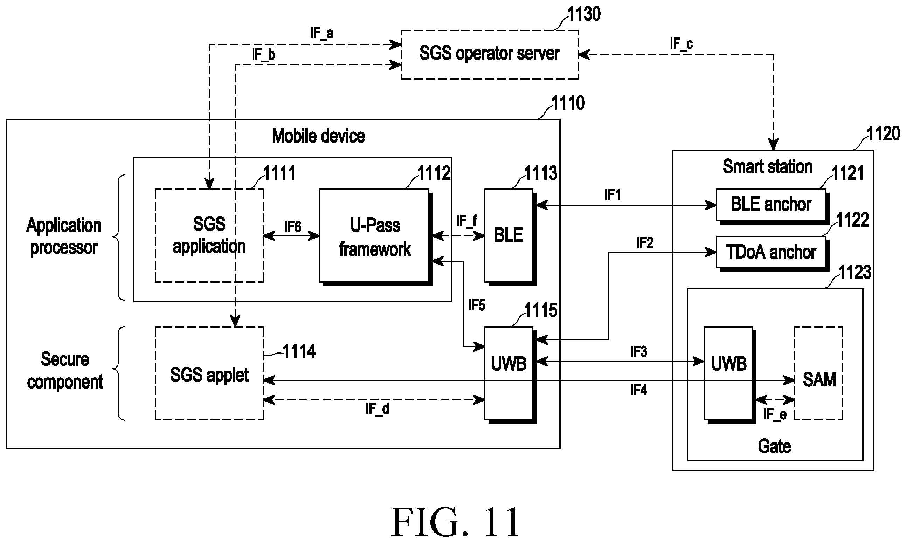

FIG. 11 illustrates an example architecture of a system of providing a UWB-based gate service according to an embodiment of the disclosure.

In the disclosure, the UWB-based gate service may be referred to as a gate service or a smart gate service (SGS), and the system that provides a UWB-based gate service may be referred to as a gate system or a smart gate system.

Referring to FIG. 11, the gate system may include a mobile device (user device) 1110, a smart station 1120 and/or an SGS operator server.

(1) The mobile device 1110 may include an SGS application 1111, a framework (U-pass framework) 1112, a BLE component (sub system) 1113, an SGS applet 1114, and/or a UWB component (sub system) 1115. In an embodiment, the SGS application 1111, the U-pass framework 1112, the BLE component 1113, the SGS applet 1114, and/or the UWB component 1115 of the mobile device 1110 may be examples of the framework, UWB-enabled application, applet, OOB component, and UWB component, respectively, of the UWB device described above in connection with, e.g., FIG. 2.

The U-pass framework 1112 may support at least one of the following functions.

- Estimate the position of the mobile device during the Downlink-TDoA (D-TDoA) round
- Implement procedures for performing UWB ranging and transaction
- Provide a set of APIs for the SGS operator's application (SGS application) and provide an interface between the framework and UWB components.
- Trigger UWB communication (component) when BLE advertisement is received from smart station.

The SGS application may support at least one of the following functions.

- When requested by the framework, provide anchor and UWB block structure deployment information
- Provide the framework with the AID of SGS applets and the version of the SGS applet protocol
- Communication with the SGS operator server to initiate service application installation, station specific information retrieval (e.g., anchor map), and token retrieval or renewal process

The SGS applet may support at least one of the following functions.

- Hosted on a secure component (e.g., SE or TEE) capable of communicating through a UWB interface.
- Implement transaction protocol for gate service
- Support APDU command

The BLE component 1113 may be used to receive at least one BLE message from the smart station when the mobile device enters the service area of the gate system.
The UWB component 1115 may be used to estimate the position of the mobile device, e.g., by D-TDoA, and/or may be used to communicate with a specific gate to perform UWB ranging and transactions.
(2) The smart station 1120 may include at least one BLE anchor 1121, at least one TDoA anchor (UWB anchor) 1122, and/or at least one gate (gate device) 1123.
The BLE anchor 1121 may be used to provide general station information about the mobile device and to inform that the mobile devices are entering the service area of the gate system.
In an embodiment, the BLE anchor 1121 may support a role as a GAP broadcaster, a role as a GATT server, and/or broadcasting of the advertising physical channel PDU.
The TDoA anchor (UWB anchor) 1122 may be deployed in the service area of the gate system. The TDoA anchor (UWB anchor) 1122 may broadcast UWB messages at a specific time. This UWB message may be used by the mobile device to estimate its position.
The gate device 1123 may include at least one UWB component (sub-system) and/or a security authentication module. The UWB component may be an example of the UWB subsystem described above in connection with FIG. 1 and the like.
The UWB component may be used to communicate with the mobile device for gate access and gate ranging, so as to identify whether the mobile device is within an effective range to perform the transaction procedure and pass through the gate.
In an embodiment, the UWB component may support at least one of the following features.

- Perform DS-TWR
- Perform gate connection and gate ranging
- Provide an interface to the security authentication module

The security authentication module may be used to verify whether the mobile device is authenticated to use the gate system.
In an embodiment, the security authentication module may support at least one of the following features.

- Provides an interface to the UWB component

- Capability of communication through UWB interface
- Capability for synchronization with the SGS operator server

(3) The SGS operator server 1130 may manage the entire gate system. To this end, the SGS operator server may communicate with the mobile device and smart station.

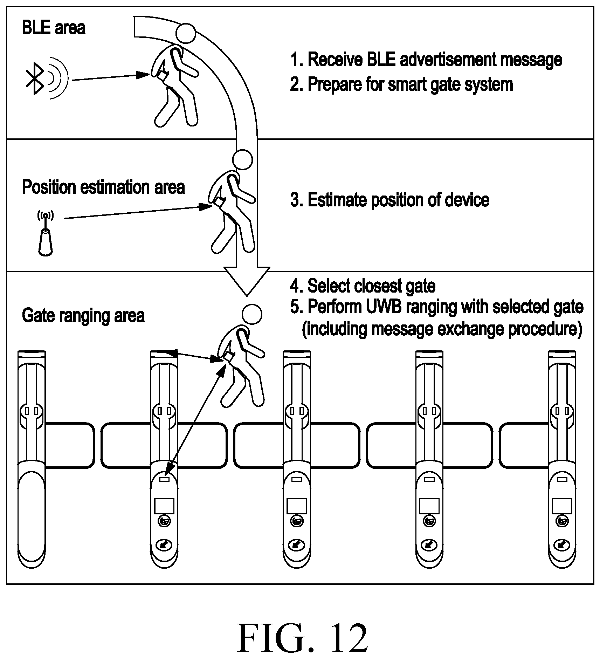

FIG. 12 illustrates an example operation scenario of a gate system according to an embodiment of the disclosure.

The gate system of FIG. 12 may be an example of the gate system of FIG. 11.

Referring to FIG. 12, in operation 1, when the mobile device (or the user carrying the mobile device) enters the BLE area of the gate system, the mobile device may receive a BLE advertisement message (packet) from at least one BLE anchor of the smart station. The at least one BLE anchor may be positioned in the BLE area.

In operation 2, upon receiving the BLE advertisement message, a prerequisite procedure for the gate system may be performed. In other words, the gate system may be prepared. In an embodiment, the prerequisite procedure may be activated by the UWB component of the mobile device and be used to obtain authentication-related information and/or UWB-related information from the SGS operator server.

In operation 3, when the mobile device enters a position estimation area, the mobile device may estimate its position to determine the closest gate which it is to pass. In an embodiment, the mobile device may receive a TDoA message from at least one TDoA anchor of the smart station and estimate its position using a D-TDoA scheme. The application (SGS application) of the mobile device may provide or use the positions of gate(s).

In operation 4, the mobile device may select the closest gate. In an embodiment, the mobile device may select the closest gate based on the result of estimation of the position of the mobile device and the position of the gate(s).

In operation 5, the mobile device may perform a procedure for UWB ranging with the selected gate. After selecting the closest gate, the mobile device may participate in contention in a specific slot to perform UWB ranging with the gate. Slots (contention period) possible for participating in contention may be known through a UWB message by the gate. If the mobile device obtains a chance for transmittance, UWB ranging and service protocol (transaction) may be performed with the gate. After proper authentication or payment capability is verified through exchange of messages and UWB ranging, the user may pass the gate.

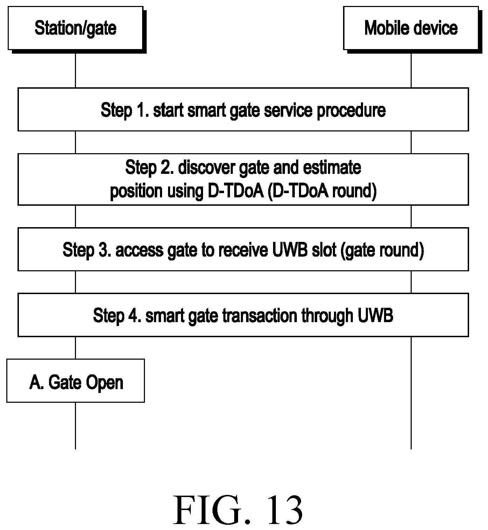

FIG. 13 illustrates a smart gate service procedure of a gate system according to an embodiment of the disclosure.

The gate system of FIG. 13 may be an example of the gate system of FIG. 11.

Referring to FIG. 13, a smart gate service procedure may be performed between a smart station including at least one gate device and at least one mobile device.

The smart gate service procedure may include a smart gate service initiation phase (phase 1), a gate discovery and position estimation phase using D-TDoA (phase 2), a gate access phase for UWB slot reservation (phase 3), and/or a transaction phase through UWB (phase 4). If the transaction (transaction phase) according to the smart gate service procedure is complete, a specific gate may be open. Thus, the user may enter or exit the specific gate.

In an embodiment, the smart gate service initiation phase may include, e.g., operations 1 and 2 of FIG. 12.

In an embodiment, the gate discovery and position estimation phase may include, e.g., operation 3 of FIG. 12.

In an embodiment, the gate access phase for UWB slot reservation may include, e.g., the access operation (participation in contention) of operations 4 and 5 of FIG. 12. During the gate access phase (procedure), the mobile device may participate in contention to occupy a slot for data communication. If the mobile device obtains a specific slot, the gate and the mobile device may exchange data for the service protocol.

In an embodiment, the transaction phase through UWB may include, e.g., the UWB ranging and service protocol (transaction) operation of operation 5 of FIG. 12. In an embodiment, the service protocol may need a plurality of, e.g., ranging blocks to complete the message exchange procedure. For example, to complete the message exchange procedure for each gate, a plurality of ranging rounds may be needed and, since one round for the corresponding gate may be allocated to one block, the service protocol may require a plurality of blocks to complete the message exchange procedure.

The disclosure provides a method for performing pose detection using a UWB signal by an electronic device. The UWB signal may be a UWB signal used for DL-TDoA ranging (OWR) or a UWB signal used for DS-TWR ranging. In the disclosure, the pose may be, e.g., a pose related to where the user is holding the user device (e.g., handheld) or where the user is putting it (e.g., back pocket/front pocket).

The disclosure provides a method in which the electronic device receives a UWB signal to obtain UWB channel impulse response (CIR) data and classifies whether a UWB signal is a line of sight (LOS) signal or a non-LOS (NLOS) signal based on the UWB CIR data. For classification of LOS signals or NLOS signals, a convolutional neural network (CNN) algorithm (model) may be used. As such, the electronic device of the disclosure may have high classification accuracy by classifying data having time series characteristics using a CNN model. Effective CIR data where noise is removed from UWB CIR data may be used as input data to the CNN model used for classification of LOS signals or NLOS signals. Accordingly, the classification accuracy of the LOS/NLOS signal and the classification accuracy of the pose may be increased.

The disclosure provides a method for an electronic device to perform pose classification using a classification result (signal classification result) of an LOS signal or NLOS signal and sensing data. Data (IMU data) of an inertial measurement unit (IMU) sensor may be used as the sensing data. Two CNN models (e.g., two parallel CNN models) different from the CNN model used for classification of LOS/NLOS signals may be used to perform pose classification using signal classification results and sensing data. One of the two CNN models may be trained using IMU data (first training data) associated with the LOS signal, and the other CNN model may be trained using IMU data (second training data) associated with the NLOS signal. As described above, data having different characteristics may be classified using separate CNN models, thereby increasing classification accuracy.

The disclosure provides a method for the electronic device to filter prediction data output from each CNN model before the final LOS/NLOS signal classification and the final pose classification. For filtering, a moving average filter may be used. Accordingly, the classification accuracy of the LOS/NLOS signal and the classification accuracy of the pose may be increased.

The disclosure provides a method in which the classified LOS/NLOS signal and/or the classified pose may be used by various applications of the user device. For example, the classification method of the disclosure may be used in an application for tagless gate (smart gate), a digital car key application, or a point of service (POS) application. The application may appropriately provide a specific service or a function/parameter associated with the specific service using the accurately classified LOS/NLOS signal and/or the classified pose.

In an embodiment, the application may perform adaptive ranging frequency adjustment for power saving using the accurately classified LOS/NLOS signal. For example, the application may set the maximum sleep duration through adaptive ranging frequency adjustment using the classified LOS/NLOS signals.

In an embodiment, the application may increase the accuracy of position estimation by selectively using only the LOS signal through accurate LOS/NLOS signal classification.

In an embodiment, the application may set an adaptive access boundary through accurate classification of LOS/NLOS signals and/or poses.

Hereinafter, various embodiments for setting an adaptive access boundary in a gate environment by a user device through classification of LOS/NLOS signals and/or poses are described. For example, the user device may adaptively set (or adjust) the gate ranging area (e.g., gate access area and/or gate area) in a gate environment through the classification of LOS/NLOS signals and/or poses.

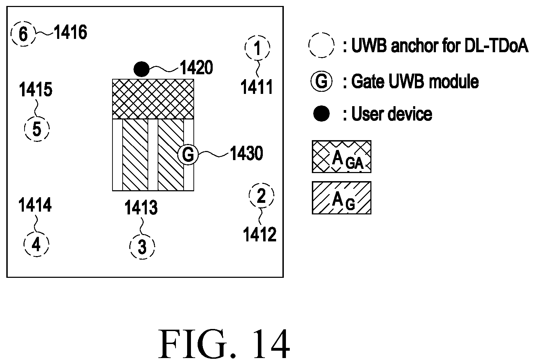

First, a gate environment to which the disclosure may be applied is to be exemplarily described with reference to FIG. 14.

FIG. 14 illustrates a gate environment according to an embodiment of the disclosure.

Referring to FIG. 14, the gate environment may include a plurality of UWB anchors (e.g., six UWB anchors 1411 to 1416) for DL-TDoA, at least one user device 1420 supporting UWB communication, and/or at least one gate device 1430 supporting UWB communication.

The gate environment may be divided into a gate access area $A_{GA}$, a gate area $A_G$ and a remaining area. The remaining area may include a position estimation area (e.g., the position estimation area of FIG. 12) where DL-TDoA positioning is performed. In the disclosure, the area including the gate access area and the gate area may be referred to as a gate ranging area (e.g., the gate ranging area of FIG. 12).

In the disclosure, the gate access area may be an area in which DS-TWR between the user device and the gate device for a transaction is initiated. When the user device (or user) is positioned in the gate access area, DS-TWR between the user device and the gate device for the transaction may be initiated.

In the disclosure, the gate area may be an area in which the gate device may open the gate for the corresponding user based on the result of the transaction through the DS-TWR. When the user device (or user) is positioned in the gate area, the gate device may open the gate based on the result of the transaction through the DS-TWR with the user device.

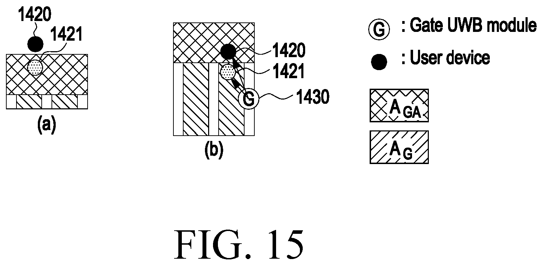

FIG. 15 exemplarily illustrates issues occurring in a gate environment according to an embodiment of the disclosure.

The gate environment of FIG. 15 may be, e.g., the gate environment of FIG. 14.

Part (a) of FIG. 15 illustrates an issue (DL-TDoA issue) that occurs when DL-TDoA is performed.

Referring to part (a) of FIG. 15, although the actual user (or user device) 1421 is positioned within the gate access area, the user device 1420 may identify itself as being positioned outside the gate access area AGA due to low position accuracy such as the NLOS environment. In this case, even though the actual user (or user device) 1421 is positioned in the gate access area, the user device 1421 only performs DL-TDoA positioning, but may not initiate DS-TWR with the gate device for transactions. Therefore, the opening of the gate may be delayed.

The DL-TDoA issue may be solved by extending the gate access area according to NLOS conditions.

Part (b) of FIG. 15 illustrates an issue (DS-TWR issue) that occurs when performing DS-TWR.

Referring to part (b) of FIG. 15, although the actual user (or user device) 1421 is positioned within the gate area, the user device 1420 may identify itself as being positioned outside the gate access area $A_G$ (e.g., positioned in the gate access area). This may occur when the actual position of the user and the position identified by the user device are different, such as when the user device 1420 is in the user's back pocket, although the position identified by the user device 1420 is accurate. Alternatively, this may occur when the position identified by the user device 1420 is inaccurate, e.g., when the position identified by the user device 1420 is measured as farther from the gate than the actual position due to the NLOS environment, such as when the user device 1420 is in the user's back pocket. In this case, the gate may not be opened at the correct time, but may be opened too early, or may be opened too late.

This DS-TWR issue may be solved by adjusting the margin (or length) of the gate area according to the pose of the user device.

Hereinafter, various embodiments for solving the above-described DL-TDoA issue and DS-TWR issue are exemplarily described.

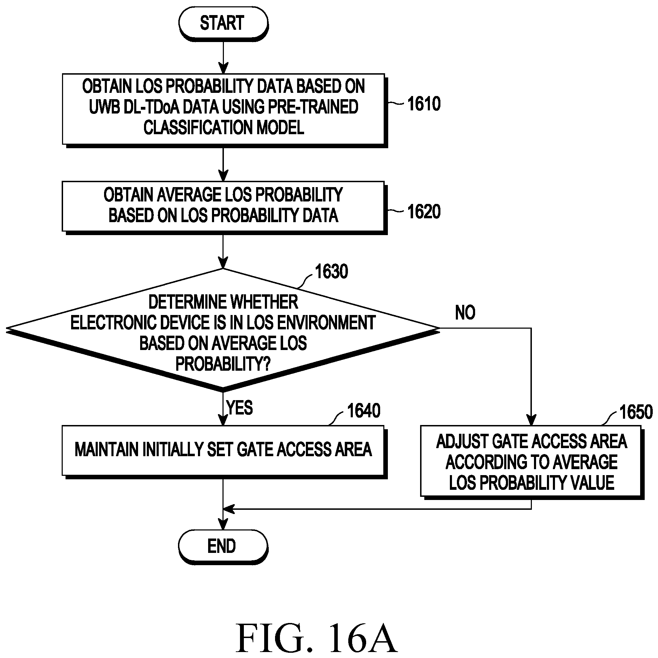

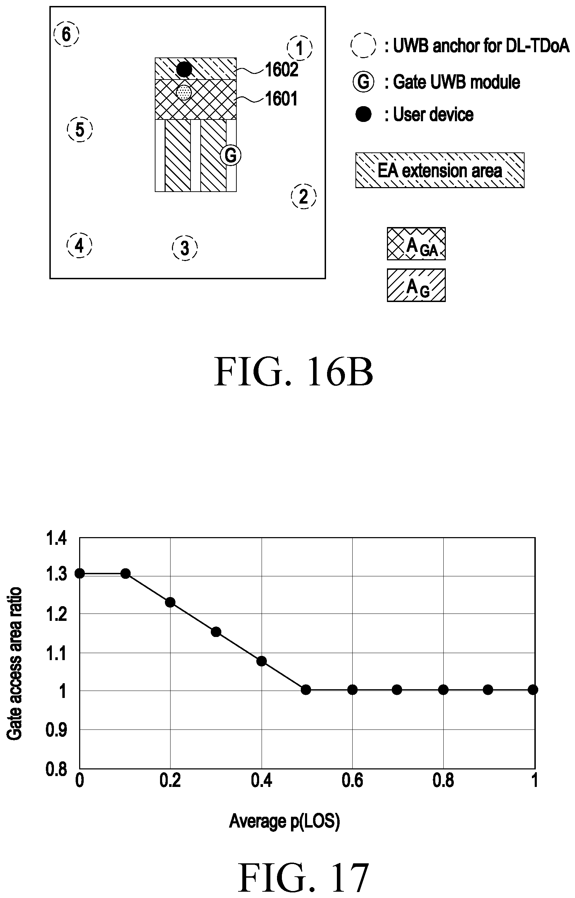

FIG. 16A illustrates a method for setting an adaptive gate access area in a gate environment according to an embodiment of the disclosure. FIG. 16B illustrates an example of a gate access area extended according to an adaptive gate access area setting method in a gate environment according to an embodiment of the disclosure. FIG. 17 illustrates a gate access area ratio according to a LOS probability according to an embodiment of the disclosure.

The gate environment of FIG. 16A/B may be, e.g., the gate environment of FIG. 14.

The user device may obtain an LOS probability for the UWB signal (DL-TDoA signal) for the DL-TDoA received from each UWB anchor. Here, the LOS probability means a probability that the corresponding UWB signal is an LOS signal. The LOS probability may be represented as p(LOS). In an embodiment, the user device may obtain the LOS probability (LOS probability data) for the UWB signal (DL-TDoA signal) of each UWB anchor using a pre-trained LOS/NLOS classification model (e.g., CNN-based LOS/NLOS classification model (CNN model) of FIG. 7/8).

An example of the LOS probability (LOS probability data) for each of the UWB anchors obtained in the gate environment of FIG. 14 may be shown in Table 6 below.

[Table 6]

| Anchor# | p(LOS) |
|---------|--------|
| 1 | 0.42 |
| 2 | 0.51 |
| 3 | 0.64 |
| 4 | 0.25 |
| 5 | 0.49 |
| 6 | 0.12 |
| Avg. | 0.405 |

Referring to Table 6, e.g., the LOS probability for the UWB signal of the first UWB anchor 1411 is 0.42, and the LOS probability for the UWB signal of the second UWB anchor 1412 is 0.51.

The user device may determine an LOS-related state (condition) based on the obtained LOS probability. In an embodiment, the user device may calculate the average (average LOS probability (average p(LOS), $\overline{p}$) of the obtained LOS probabilities (1620) and determine whether the user device is in the LOS environment (whether it is in the LOS state) based on the calculated average LOS probability (1630). For example, when the calculated average of the LOS probabilities is larger than a preset first threshold (e.g., 0.5), the user device may determine that the state (or environment) is the LOS state (or LOS environment). When the calculated average of the LOS probabilities is not larger than the preset first threshold (e.g., 0.5), the user device may determine that the state (or environment) is the NLOS state (or the NLOS environment).

When it is identified that the user device is in the LOS state (or the LOS environment), the user device may maintain the initially set gate access area (1640).

When it is identified that the user device is in the NLOS state (or the NLOS environment), the user device may adjust the initially set gate access area based on the average value (average LOS probability value) of the LOS probabilities (1650).

For example, as illustrated in FIG. 17, it may be assumed that the gate access area ratio x of the gate access area to the initially set gate access area (e.g., the gate access area 1601 of FIG. 16B) is extendable to the maximum value (e.g., 1.3) of a preset gate access area ratio x. Here, x denotes the gate access area ratio. In this case, when the value of the average LOS probability is smaller than a second threshold (e.g., 0.1), the user device may extend the gate access area by the maximum value (e.g., 1.3) of the gate access area ratio x, (i.e., add an extension area (e.g., the extension area 1602 of FIG. 16B) of the initially set gate access area*0.3). When the value of the average LOS probability is larger than the second threshold (e.g., 0.1) and smaller than the first threshold (e.g., 0.5), the user device may linearly extend the gate access area, e.g., as shown in FIG. 17. For example, the gate access area ratio x may be determined according to the value of the average LOS probability based on the linear function of FIG. 17.

In an embodiment, the user device may extend the gate access area in the direction of entering the gate, as illustrated in FIG. 16B. In other words, as illustrated in FIG. 16B, an extension area 1602 for the gate access area may be added in the direction of entering the gate.

In an embodiment, the user device may transfer information about the adjusted gate access area to the gate device. The gate device may perform DS-TWR with the user device based on the corresponding information.

Meanwhile, there may be limitations in extending the gate access area in the gate entry direction. For example, there may be cases in which it is impossible to expand the area in the direction of entering the gate according to the actual building structure. Therefore, it is necessary to consider extending the gate access area in an extendable direction using map information about the gate installation space (gate environment).

In an embodiment, the user device may obtain information about the extension area at the initial entry (e.g., when initially entering the smart station (e.g., when entering the BLE area of FIG. 12)), through OOB communication (e.g., BLE communication) and/or in-band communication.

In an embodiment, the information about the extension area may include information about the maximum value of the gate access area ratio x and/or information about at least one maximum extendable area (e.g., the number of maximum extendable areas, or the position and/or size of each extendable area). In an embodiment, upon initial entry, information about the extension area may be received together with information about the initially set gate access area. The information about the gate access area may include information about the position and/or size of the initially set gate access area.

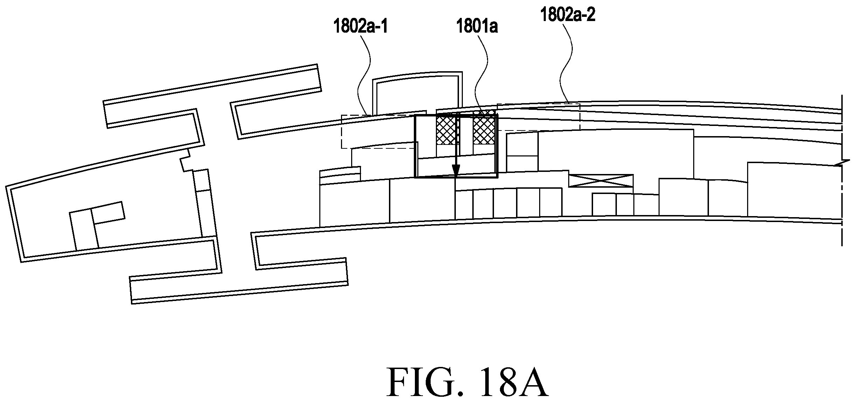

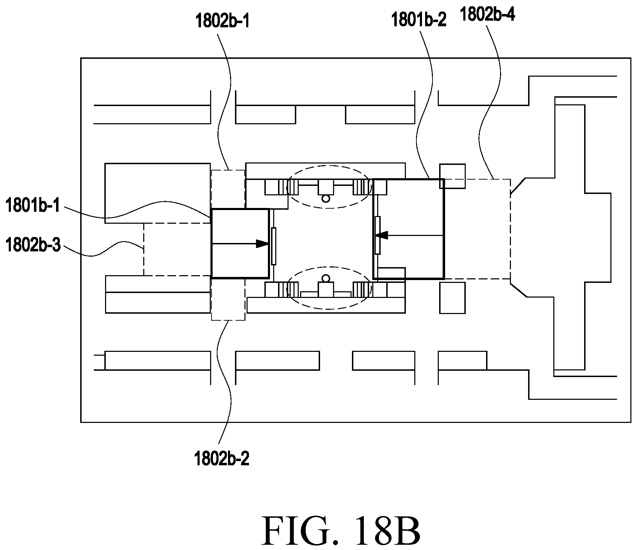

FIGS. 18A and 18B illustrate a method for setting a maximum extendable area to set an adaptive gate access area in a gate environment according to an embodiment of the disclosure.

The gate environment of FIGS. 18A and 18B may be, e.g., the gate environment of FIG. 14.

In the case of embodiments of FIGS. 18A and 18B, a gate access area may be set using map information (e.g., an indoor map). In other words, in the case of the embodiments of FIGS. 18A and 18B, the range of the gate access area to be extended may be set differently according to the shape of the map of the area in which the gate is installed.

In the embodiment of FIG. 18A, it is assumed that the initial gate access area 1801a and the maximum extendable areas 1802a-1 and 1802a-2 of the gate access area are initially set.

Referring to FIG. 18A, in a map form as shown in FIG. 18A, the gate access area may extend left and right of the initial gate access area 1801a. The maximum extendable area that may be extended to the left may be the same as the first maximum extendable area 1802a-1, and the maximum extendable area that may be extended to the right may be the same as the second maximum extendable area 1802a-2.

In the embodiment of FIG. 18B, it is assumed that the initial gate access areas 1801b-1 and 1801b-2 and the maximum extendable areas 1802b-1, 1802b-1, 1802b-3, and 1802b-4 of the gate access area are initially set.

Referring to FIG. 18B, in the map form as shown in FIG. 18B, the gate access area may extend up/down/left/right of the initial gate access areas 1801b-1 and 1801b-2. The maximum extendable area that is expandable to the right may be the same as the first maximum extendable area 1802b-1, the maximum extendable area that is expandable to the left may be the same as the second maximum extendable area 1802b-1, and the maximum extendable area that is expandable upward (or downward) may be the same as the third maximum extendable area 1802b-3 and the fourth maximum extendable area 1802b-4.

The maximum extendable area may be set in advance. For example, a server (e.g., a backend server) connected to the gate may pre-set the maximum extendable area based on the map information. In an embodiment, the setting of the maximum extendable area may be an output of image processing using map information as an input.

Information about the set maximum extendable area may be transferred to the user device. The user device may obtain information about the maximum extendable area as the information about the extension area at the initial entry (e.g., when initially entering the smart station, through OOB communication (e.g., BLE communication) and/or in-band communication. In an embodiment, upon initial entry, information about the extension area may be received together with information about the initially set gate access area.

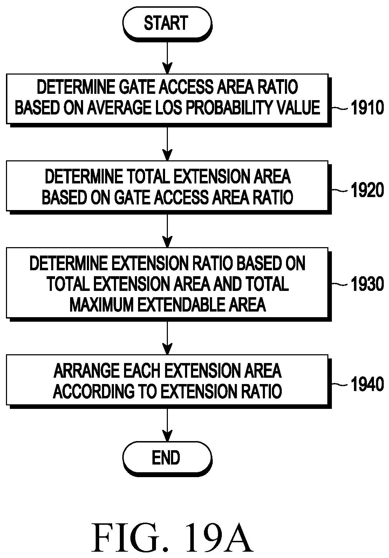

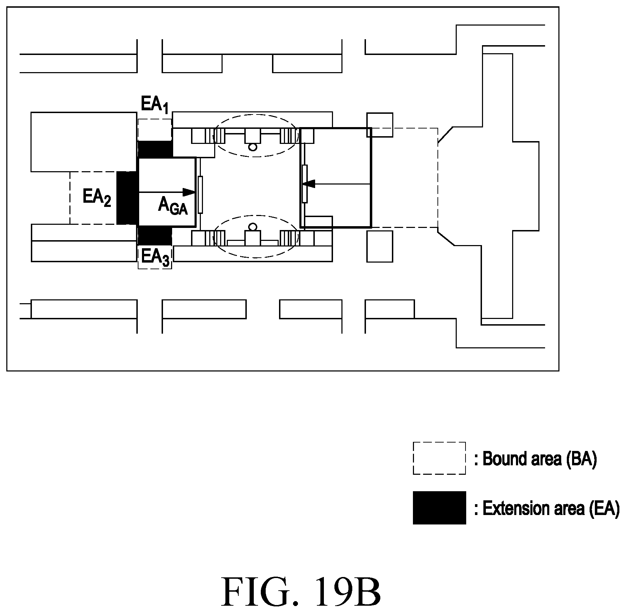

FIG. 19A illustrates a method for setting an adaptive gate access area using a maximum extendable area in a gate environment according to an embodiment of the disclosure. FIG. 19B illustrates an example of a gate access area extended according to an adaptive gate access area setting method in a gate environment according to an embodiment of the disclosure.

The gate environment of FIG. 19A/B may be, e.g., the gate environment of FIG. 14.

For convenience of description, it is assumed that the maximum extendable area of FIG. 19 is, e.g., the maximum extendable area of FIG. 18B, but is not limited thereto. For example, the maximum extendable area of FIG. 18A may be used in the embodiment of FIG. 19.

In an embodiment, the method for setting the adaptive gate access area of FIG. 19A may be, e.g., an example of operation 1650 of FIG. 16A. In this case, the adaptive gate access area setting method of FIG. 19A may be performed, e.g.,

after operations 1610 to 1630 of FIG. 16A. For a description of the corresponding operation, the description of FIG. 16A may be referred to.

In the case of the embodiment of FIG. 19A/B, the degree of extension of each area may be determined using the same extension ratio a. To determine the extension ratio a, the gate access area ratio x and the entire extension area need to be determined first.

Referring to FIG. 19A, the user device may determine the gate access area ratio x based on the value of the average LOS probability (1910). The method for determining the gate access area ratio x may follow the method described in the embodiment of FIG. 16/17.

The user device may determine the entire extension area EA based on the gate access area ratio (1920).

In an embodiment, the entire extension area EA may be determined by Equation 1 below.

$$[\text{Equation 1}]$$

$$EA = (x - 1) * A_{GA}$$

Here, x denotes the gate access area ratio, and $A_{GA}$ denotes the initially set gate access area.

The user device may determine the extension area a based on the total extension area EA and the total maximum extendable area $BA_t$ (1930).

In an embodiment, the extension area a may be determined by Equation 2 below.

$$[\text{Equation 2}]$$

$$a = EA/BA_t$$

Here, BAt corresponds to the sum of bound areas BA corresponding to the maximum extendable area, and as shown in FIG. 19B, when three maximum extendable areas are set for the gate access area, it may be represented as shown in Equation 3 below.

$$[\text{Equation 3}]$$

$$BA_t = BA_1 + BA_2 + BA_3$$

Here, $BA_1$ denotes the bound area corresponding to the first maximum extendable (e.g., the first maximum extendable area 1802b-1), $BA_2$ denotes the bound area corresponding to the second maximum extendable (e.g., the second maximum extendable area 1802b-2), and $BA_3$ denotes the bound area corresponding to the third maximum extendable (e.g., the third maximum extendable area 1802b-2).

The user device may arrange each extension area according to the extension ratio (1940).

In an embodiment, each extension area according to the extension ratio a may be determined by Equation 4 below.

$$[\text{Equation 4}]$$

$$EA_1 = a * BA_1$$

$$EA_2 = a * BA_2$$

$$EA_3 = a * BA_3$$

As shown in FIG. 19B, each of the determined extension areas may be set within a corresponding bound area.

As such, in the case of the embodiment of FIG. 19A/B, the gate access area may be adaptively extended according to a ratio of each area. Further, compared to the embodiment of FIG. 16B, in the case of the embodiment of FIG. 19B, the gate access area may be extended in various directions and/or forms.

In an embodiment, the user device may transfer information about the adjusted gate access area to the gate device. The gate device may perform DS-TWR with the user device based on the corresponding information.

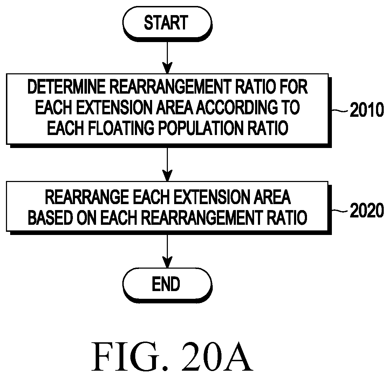

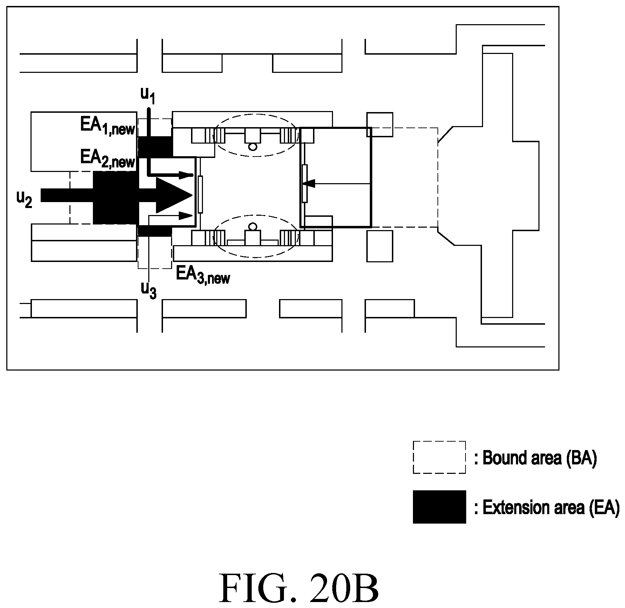

FIG. 20A illustrates a method for setting an adaptive gate access area using a maximum extendable area in a gate environment according to an embodiment of the disclosure. FIG. 20B illustrates an example of a gate access area extended according to an adaptive gate access area setting method in a gate environment according to an embodiment of the disclosure.

The gate environment of FIG. 20A/B may be, e.g., the gate environment of FIG. 14.

For convenience of description, it is assumed that the maximum extendable area of FIG. 20A/B is, e.g., the maximum extendable area of FIG. 18B, but is not limited thereto. For example, the maximum extendable area of FIG. 18A may be used in the embodiment of FIG. 20A/B.

In the case of the embodiment of FIG. 20A/B, unlike the embodiment of FIG. 19A/B, a different rearrangement ratio may be further used for each extendable area (bound area). In an embodiment, the rearrangement ratio may be determined considering a floating population ratio for a corresponding area. In an embodiment, the floating population ratio may be determined through path tracing for users based on DL-TDoA. To that end, the user device may record a path immediately before passing through the gate and transfer information about the path to the gate device.

In an embodiment, the method for setting the adaptive gate access area of FIG. 20A may be, e.g., an example of operation 1650 of FIG. 16A. For example, the adaptive gate access area setting method of FIG. 20A may be performed after each extension area is arranged. For example, the adaptive gate access area setting method of FIG. 20A may be a rearrangement method performed after each extension area is arranged according to the adaptive gate access area setting method of FIG. 19A. For a description of the arrangement operation of each extension area, the description of FIG. 19A may be referred to.

Referring to FIG. 20A, the user device may determine the rearrangement ratio $\beta$ for each extension area (or bound area) according to each floating population ratio (2010).

To determine the rearrangement rate $\beta$, the floating population ratio for each bound area should first be determined. The floating population ratio may be determined by a server (e.g., a backend server) connected to the gate device, based on information about the path transferred from a plurality of user devices. The information about the floating population ratio for each bound area determined thusly may be transferred to the user device together with information about the maximum extendable area corresponding to the bound area. For example, at the initial entry (e.g., at the initial entry into the station), the user device may obtain information about the floating population ratio for each bound area, along with information about the maximum extendable area, through OOB communication (e.g., BLE communication) and/or in-band communication.

In an embodiment, the rearrangement ratio $\beta$ for each bound area may be determined by Equation 5 below.

[Equation 5]

$$\beta_1 = \frac{EA_1 * u_1}{EA_1 * u_1 + EA_2 * u_2 + EA_3 * u_3}, \beta_2 = \frac{EA_2 * u_2}{EA_1 * u_1 + EA_2 * u_2 + EA_3 * u_3}, \beta_3 = \frac{EA_3 * u_3}{EA_1 * u_1 + EA_2 * u_2 + EA_3 * u_3}$$

Here, $\beta_1$ denotes the rearrangement ratio for the first bound area (e.g., the bound area corresponding to the first maximum extendable area 1802b-1), $\beta_2$ denotes the rearrangement ratio for the second bound area (e.g., the bound area corresponding to the second maximum extendable area 1802b-2), and $\beta_3$ denotes the rearrangement ratio for the third bound area (e.g., the bound area corresponding to the third maximum extendable area 1802b-2).

$EA_1$ denotes the current extension area for the first bound area, $EA_2$ denotes the current extension area for the second bound area, and $EA_3$ denotes the current extension area for the third bound area. The corresponding extension areas may be determined (or arranged) according to, e.g., the method of FIG. 19A.

u1 denotes the floating population ratio for the first bound area, u2 denotes the floating population ratio for the second bound area, and u3 denotes the floating population ratio for the third bound area. The total floating population ratio may be represented as ut = u1+u2+u3.

The user device may rearrange each extension area based on each rearrangement ratio (2020).

In an embodiment, the extension area (new extension area) to be rearranged according to the determined rearrangement ratio may be determined by the following Equation 6.

[Equation 6]

$$EA_{1,new} = \beta_1 * EA_1$$

$$EA_{2,new} = \beta_2 * EA_2$$

$$EA_{3,new} = \beta_3 * EA_3$$

Here, $EA_{1,new}$ denotes the new extension area for the first bound area, $EA_{2,new}$ denotes the new extension area for the second bound area, and $EA_{3,new}$ denotes the new extension area for the third bound area.

Each extension area thusly rearranged may be shown in, e.g., FIG. 20B. For example, as shown in FIG. 20B, the new extension area $EA_{2,new}$ for the second bound area having the highest floating population ratio may be rearranged to haven an increased extension area over the existing extension area, the new extension area $EA_{1,new}$ for the first bound area having an intermediate floating population ratio may be rearranged to have an extension area to maintain the existing extension area, and the new extension area $EA_{1,new}$ for the third bound area having the lowest floating population ratio may be rearranged to have a decreased extension area over the existing extension area.

By setting a different weight of the extension area considering the floating population ratio, e.g., an extension area corresponding to the corresponding environment (e.g., a multi-user environment) may be adaptively provided.

The user device may transfer information about the adjusted (or rearranged) gate access area to the gate device. The gate device may perform DS-TWR with the user device based on the corresponding information.

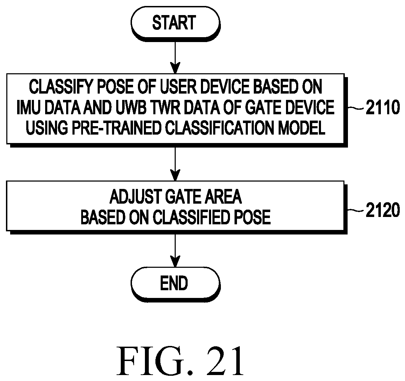

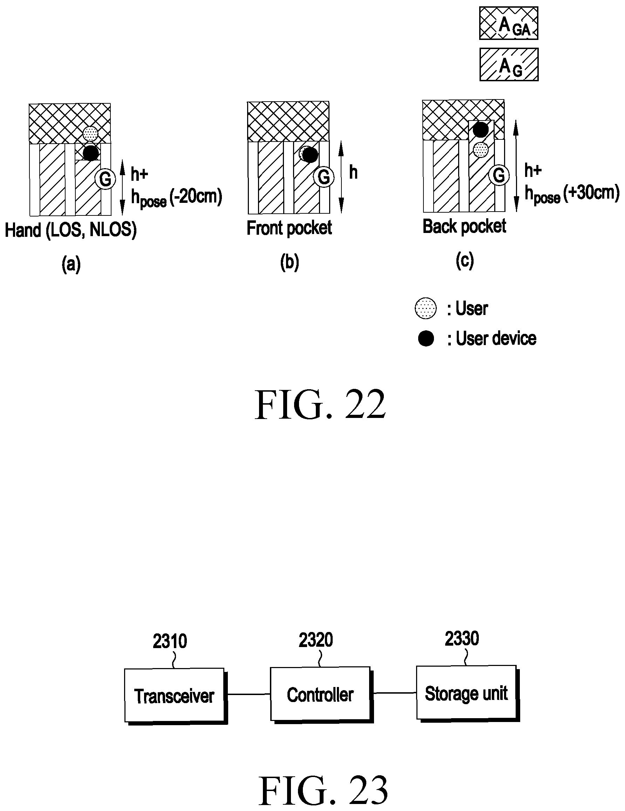

FIG. 21 illustrates a method for setting an adaptive gate area according to an embodiment of the disclosure. FIG. 22 illustrates examples of a gate area set according to an adaptive gate area setting method in a gate environment according to an embodiment of the disclosure.

The gate environment of FIGS. 21 and 22 may be, e.g., the gate environment of FIG. 14.

As described above, the position (or pose) of the user device affects the timing when the gate device opens the gate. For example, according to the pose of the user device, the gate may open too early or too late. Therefore, it is necessary to consider a method for opening the gate at an appropriate time by adaptively adjusting the gate area according to the pose of the user device.

Referring to FIG. 21, the user device may classify the pose of the user device using the IMU data and the UWB signal for DS-TWR received from the gate device. The user device may classify the pose of the user device using the IMU data and the UWB signal (UWB TWR data) for DS-TWR using a pre-trained pose classification model (e.g., the pose model (CNN model) based on CNN of FIG. 9/10) (2110).

The so classified pose may be one of the above-described Handheld (LOS) pose, Handheld (NLOS) pose, Front pocket (LOS) pose, or Back Pocket (NLOS) pose, but is not limited thereto.

The user device may adjust the gate area based on the classified pose (2120). For example, the user device may adjust the margin (e.g., length) of the gate area based on the classified pose.

For example, as shown in part (a) of FIG. 22B, when the classified pose is a first pose (e.g., Handheld (LOS) pose or Handheld (NLOS) pose) in which the user device is positioned in front of the user, the user device may adjust the length h of the gate area by an actual position error hpose according to the classified pose. For example, the user device may adjust the length of the gate area by the actual position error (hpose=-20).

For example, as shown in part (b) of FIG. 22, when the classified pose is a second pose (e.g., front pocket (LOS) pose) in which the user device is positioned close to the user, the user device may maintain the length h of the gate area.

For example, as shown in part (c) of FIG. 22, when the classified pose is a third pose (e.g., back pocket (NLOS) pose) in which the user device is positioned behind the user, the user device may adjust the length h of the gate area by an actual position error hpose according to the classified pose. For example, the user device may adjust the length of the gate area by the actual position error (hpose=+30) as much as the thickness of the user's body.

The user device may transfer information about the adjusted gate area to the gate device. The gate device may open the gate at an appropriate time by performing DS-TWR for transactions with the user device based on the corresponding information.

Through the adaptive adjustment of the gate area, the gate may open at an appropriate time.

The embodiments of FIGS. 14 to 22 described above may be combined unless they contradict each other.

FIG. 23 is a view illustrating a structure of an electronic device according to an embodiment of the disclosure.

In the embodiment of FIG. 23, the electronic device may be the user's electronic device (user device) or a server.

Referring to FIG. 23, the electronic device may include a transceiver 2310, a controller 2320, and a storage unit 2330. In the present disclosure, the controller may be defined as a circuit, an application-specific integrated circuit, or at least one processor.

The transceiver 2310 may transmit and receive signals to/from other network entities. The transceiver 2310 may transmit/receive data for commissioning.

The controller 2320 may control the overall operation of the electronic device according to an embodiment. For example, the controller 2320 may control inter-block signal flow to perform the operations according to the above-described flowchart. Specifically, the controller 2320 may control the operations of the electronic device described above with reference to FIGS. 1 to 22.

The storage unit 2330 may store at least one of information transmitted/received via the transceiver 2310 and information generated via the controller 2320. For example, the storage unit 2330 may store information and data necessary for adaptive area adjustment described above with reference to FIGS. 1 to 22.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

**Claims**

1. A method by an electronic device using UWB communication, the method comprising:

    obtaining LOS probability data based on a DL-TDoA signal received from at least one UWB anchor using a trained first convolutional neural network (CNN) model;
    obtaining an average LOS probability based on the LOS probability data;
    determining whether the electronic device is in a LOS environment based on the average LOS probability;
    maintaining an initially set gate access area in case that the electronic device is in the LOS environment; and
    adjusting the gate access area according to a value of the average LOS probability in case that the electronic device is in the LOS environment,
    wherein the gate access area is an area in which the electronic device and a gate device initiate DS-TWR ranging for a transaction.

2. The method of claim 1, wherein adjusting the gate access area comprises:

    determining an extension ratio based on the average LOS probability; and
    disposing at least one extension area based on the extension ratio, wherein each extension area is disposed in a maximum extendable area corresponding to a corresponding extension area.

3. The method of claim 2, wherein determining the extension ratio comprises:

    determining a gate access area ratio based on the value of the average LOS probability; and
    determining the extension ratio based on the gate access area ratio.

4. The method of claim 2, further comprising:

    determining a rearrangement ratio for each extension area based on information about a floating population ratio; and
    rearranging the at least one extension area based on the rearrangement ratio.

5. The method of claim 4, wherein the information about the floating population ratio is generated based on path information transferred from a plurality of users' electronic devices.

6. The method of claim 1, further comprising:

classifying a pose of the electronic device based on UWB TWR data and IMU data received from the gate device using a pre-trained second CNN model; and

adjusting a gate area based on the classified pose, wherein the gate area is an area where the gate device opens a gate according to a result of the transaction.

7. An electronic device using UWB communication, comprising:

a transceiver; and
a controller connected to the transceiver, wherein the controller is configured to:

obtain LOS probability data based on a DL-TDoA signal received from at least one UWB anchor using a trained first convolutional neural network (CNN) model;
obtain an average LOS probability based on the LOS probability data;
determine whether the electronic device is in a LOS environment based on the average LOS probability;
maintain an initially set gate access area in case that the electronic device is in the LOS environment; and
adjust the gate access area according to a value of the average LOS probability in case that the electronic device is in the LOS environment, and
wherein the gate access area is an area in which the electronic device and a gate device initiate DS-TWR ranging for a transaction.

8. The electronic device of claim 7, wherein the controller is configured to:

determine an extension ratio based on the average LOS probability; and
dispose at least one extension area based on the extension ratio, wherein each extension area is disposed in a maximum extendable area corresponding to a corresponding extension area.

9. The electronic device of claim 8, wherein the controller is configured to:

determine a gate access area ratio based on the value of the average LOS probability; and
determine the extension ratio based on the gate access area ratio.

10. The electronic device of claim 8, wherein the controller is configured to:

determine a rearrangement ratio for each extension area based on information about a floating population ratio; and
rearrange the at least one extension area based on the rearrangement ratio.

11. The electronic device of claim 10, wherein the information about the floating population ratio is generated based on path information transferred from a plurality of users' electronic devices.

12. The electronic device of claim 7, wherein the controller is configured to:

classify a pose of the electronic device based on UWB TWR data and IMU data received from the gate device using a pre-trained second CNN model; and
adjust a gate area based on the classified pose, wherein the gate area is an area where the gate device opens a gate according to a result of the transaction.

FIG. 1

EP 4 589 325 A1

200

| UWB-enabled application | ~210 |

- - - - - - - Interface #1 - - - - - - -

| UWB framework | ~220 |

- - - - - - - Interface #2 - - - - - - -

UWB sub system (UWBS) ~230

| UWB MAC |

| UWB PHY |

FIG. 2A

FIG. 2B

FIG. 3A

FIG. 3B

FIG. 3C

DS-TWR phase

FIG. 4

**510**  **520-1**

UWB anchor initiator  Responder

User device

**530**  RESP message

INT message

Responder  Responder

Indoor environment

**520-2**  DL-TDOA phase  **520-3**

# FIG. 5

**Training: remote server**

616

Loss function
(calculate loss
and gradient)

611 612 613 614 615

Input data
(n eCIR values) → CIR normalization
(optional) → CNN → Prediction
(LOS/NLOS)     Actual value

Learned CNN parameters,
(optional) normalization means and downloaded standard deviations

620

**Implementation: user device**

621 622 623 624

Real-time
input data → CIR normalization
(optional) → CNN → Real-time prediction
(LOS/NLOS)

626 625

Output label
(LOS/NLOS) ← Moving
average filter

**FIG. 6**

EP 4 589 325 A1

700

| 710 | 720 | 750 |
| --- | --- | --- |
| UWB antenna | Communication (CIR collector) | Central controller |

Parameters downloaded from server

730
Machine learning unit (optimized structure)

740

741 — Effective CIR generator

742 — (Optional) normalizer

743 — Moving average filter

760
Storage unit

FIG. 7

Training: remote server

800

801 Input data (n CIR values) → 802 Normalization → 803 CNN → 804 Prediction (LOS/NLOS)

804 Prediction (LOS/NLOS) → 806 Loss function (calculate loss and gradient)

805 Actual value → 806 Loss function (calculate loss and gradient)

Prediction (LOS/NLOS): LOS → 809 CNN; NLOS → 811 CNN

807 Input data (IMU: accelerometer, gravity for m timestpes) → 808 Sequence → 809 CNN → 810 Prediction (handheld/ front pocket)

811 CNN → 812 Prediction (handheld/ back pocket)

810 Prediction (handheld/ front pocket) → 814 Loss function (calculate loss and gradient)

812 Prediction (handheld/ back pocket) → 814 Loss function (calculate loss and gradient)

813 Actual value → 814 Loss function (calculate loss and gradient)

FIG. 8

FIG. 9

1000

FIG. 10

FIG. 11

**BLE area**

1. Receive BLE advertisement message
2. Prepare for smart gate system

**Position estimation area**

3. Estimate position of device

**Gate ranging area**

4. Select closest gate
5. Perform UWB ranging with selected gate (including message exchange procedure)

FIG. 12

```
┌──────────────────┐                        ┌──────────────────┐
│   Station/gate    │                        │   Mobile device   │
└──────────────────┘                        └──────────────────┘
          │                                            │
  ┌───────┴────────────────────────────────────────────┴───────┐
  │         Step 1. start smart gate service procedure           │
  └───────┬────────────────────────────────────────────┬───────┘
  ┌───────┴────────────────────────────────────────────┴───────┐
  │              Step 2. discover gate and estimate              │
  │            position using D-TDoA (D-TDoA round)             │
  └───────┬────────────────────────────────────────────┬───────┘
  ┌───────┴────────────────────────────────────────────┴───────┐
  │       Step 3. access gate to receive UWB slot (gate round)   │
  └───────┬────────────────────────────────────────────┬───────┘
  ┌───────┴────────────────────────────────────────────┴───────┐
  │          Step 4. smart gate transaction through UWB         │
  └───────┬────────────────────────────────────────────┬───────┘
  ┌───────┴───────┐                                     │
  │  A. Gate Open  │                                     │
  └───────┬───────┘                                     │
          │                                            │
```

# FIG. 13

FIG. 14

1420
1421
(a)

1420
1421
1430
(b)

Ⓖ : Gate UWB module

● : User device

A_GA

A_G

# FIG. 15

START

OBTAIN LOS PROBABILITY DATA BASED ON UWB DL-TDoA DATA USING PRE-TRAINED CLASSIFICATION MODEL ⌐1610

OBTAIN AVERAGE LOS PROBABILITY BASED ON LOS PROBABILITY DATA ⌐1620

1630
DETERMINE WHETHER ELECTRONIC DEVICE IS IN LOS ENVIRONMENT BASED ON AVERAGE LOS PROBABILITY?

NO

YES ⌐1640

MAINTAIN INITIALLY SET GATE ACCESS AREA

1650
ADJUST GATE ACCESS AREA ACCORDING TO AVERAGE LOS PROBABILITY VALUE

END

# FIG. 16A

: UWB anchor for DL-TDoA

Ⓖ : Gate UWB module

● : User device

EA extension area

$A_{GA}$

$A_G$

FIG. 16B

FIG. 17

FIG. 18A

EP 4 589 325 A1

FIG. 18B

START

DETERMINE GATE ACCESS AREA RATIO
BASED ON AVERAGE LOS PROBABILITY VALUE — 1910

DETERMINE TOTAL EXTENSION AREA
BASED ON GATE ACCESS AREA RATIO — 1920

DETERMINE EXTENSION RATIO BASED ON
TOTAL EXTENSION AREA AND TOTAL
MAXIMUM EXTENDABLE AREA — 1930

ARRANGE EACH EXTENSION AREA
ACCORDING TO EXTENSION RATIO — 1940

END

# FIG. 19A

FIG. 19B

START

DETERMINE REARRANGEMENT RATIO FOR
EACH EXTENSION AREA ACCORDING TO
EACH FLOATING POPULATION RATIO — 2010

REARRANGE EACH EXTENSION AREA
BASED ON EACH REARRANGEMENT RATIO — 2020

END

FIG. 20A

FIG. 20B

START

CLASSIFY POSE OF USER DEVICE BASED ON
IMU DATA AND UWB TWR DATA OF GATE DEVICE
USING PRE-TRAINED CLASSIFICATION MODEL ~2110

ADJUST GATE AREA
BASED ON CLASSIFIED POSE ~2120

END

FIG. 21

Hand (LOS, NLOS)

(a)

Front pocket

(b)

Back pocket

(c)

⬡ : User

● : User device

FIG. 22

FIG. 23

## INTERNATIONAL SEARCH REPORT

| International application No. |
| --- |
| **PCT/KR2023/015878** |

| A. | CLASSIFICATION OF SUBJECT MATTER |
| --- | --- |

**G01S 5/02**(2010.01)i; **G06N 3/045**(2023.01)i

According to International Patent Classification (IPC) or to both national classification and IPC

| B. | FIELDS SEARCHED |
| --- | --- |

Minimum documentation searched (classification system followed by classification symbols)

G01S 5/02(2010.01); G01S 13/00(2006.01); G01S 13/02(2006.01); G01S 5/14(2006.01); H04L 5/00(2006.01); H04W 4/021(2018.01); H04W 64/00(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: UWB 통신(UWB telecommunication), CNN 모델(Convolutional neural network model), DL-TDoA, LOS 확률(line of sight probability), 게이트 액세스(gate access)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2009-0009223 A (NTT DOCOMO, INC.) 22 January 2009 (2009-01-22)<br>See paragraphs [0027]-[0067] and figures 1a-2. | 1-12 |
| A | KR 10-2009-0030253 A (NTT DOCOMO, INC.) 24 March 2009 (2009-03-24)<br>See paragraphs [0043]-[0053] and figures 1-6. | 1-12 |
| A | US 2022-0140971 A1 (APPLE INC.) 05 May 2022 (2022-05-05)<br>See paragraphs [0091]-[0093] and figure 16. | 1-12 |
| A | US 2020-0309932 A1 (ROBERT BOSCH GMBH) 01 October 2020 (2020-10-01)<br>See paragraphs [0036]-[0038] and figures 4A-4B. | 1-12 |
| A | US 2022-0038846 A1 (SAMSUNG ELECTRONICS CO., LTD.) 03 February 2022 (2022-02-03)<br>See paragraphs [0093]-[0096] and figures 5A-5C. | 1-12 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 January 2024** | **15 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/015878**

| Patent document cited in search report | | | Publication date (day/month/year) | Patent family member(s) | | | Publication date (day/month/year) |
|---|---|---|---|---|---|---|---|
| KR | 10-2009-0009223 | A | 22 January 2009 | JP | 2009-545754 | A | 24 December 2009 |
| | | | | JP | 2009-545755 | A | 24 December 2009 |
| | | | | JP | 2009-545934 | A | 24 December 2009 |
| | | | | JP | 4495249 | B2 | 30 June 2010 |
| | | | | JP | 4499828 | B2 | 07 July 2010 |
| | | | | JP | 4567093 | B2 | 20 October 2010 |
| | | | | KR | 10-0987615 | B1 | 13 October 2010 |
| | | | | KR | 10-2009-0007574 | A | 19 January 2009 |
| | | | | KR | 10-2009-0016662 | A | 17 February 2009 |
| | | | | US | 2008-0032708 | A1 | 07 February 2008 |
| | | | | US | 2008-0032709 | A1 | 07 February 2008 |
| | | | | US | 2008-0032710 | A1 | 07 February 2008 |
| | | | | US | 7574221 | B2 | 11 August 2009 |
| | | | | US | 7577445 | B2 | 18 August 2009 |
| | | | | US | 7577446 | B2 | 18 August 2009 |
| KR | 10-2009-0030253 | A | 24 March 2009 | JP | 2010-512072 | A | 15 April 2010 |
| | | | | JP | 5139443 | B2 | 06 February 2013 |
| | | | | US | 2008-0130794 | A1 | 05 June 2008 |
| US | 2022-0140971 | A1 | 05 May 2022 | CN | 114449660 | A | 06 May 2022 |
| | | | | CN | 115706656 | A | 17 February 2023 |
| | | | | CN | 115706657 | A | 17 February 2023 |
| | | | | CN | 115706920 | A | 17 February 2023 |
| | | | | EP | 4130791 | A1 | 08 February 2023 |
| | | | | EP | 4131807 | A1 | 08 February 2023 |
| | | | | KR | 10-2023-0020928 | A | 13 February 2023 |
| | | | | US | 11729037 | B2 | 15 August 2023 |
| | | | | US | 2022-0137177 | A1 | 05 May 2022 |
| | | | | US | 2022-0141076 | A1 | 05 May 2022 |
| | | | | US | 2022-0141657 | A1 | 05 May 2022 |
| US | 2020-0309932 | A1 | 01 October 2020 | CN | 113614796 | A | 05 November 2021 |
| | | | | EP | 3948805 | A1 | 09 February 2022 |
| | | | | US | 11789135 | B2 | 17 October 2023 |
| | | | | WO | 2020-200910 | A1 | 08 October 2020 |
| US | 2022-0038846 | A1 | 03 February 2022 | CN | 116057408 | A | 02 May 2023 |
| | | | | EP | 4111230 | A1 | 04 January 2023 |
| | | | | US | 11751008 | B2 | 05 September 2023 |
| | | | | WO | 2022-025706 | A1 | 03 February 2022 |

Form PCT/ISA/210 (patent family annex) (July 2022)